# FASCICULE DE BREVET EUROPEEN

(11) **EP 2 146 534 B1**
(45) Date de publication et mention de la délivrance du brevet: **24.06.2020**
(21) Numéro de dépôt: 09290565.2
(22) Date de dépôt: 15.07.2009
(51) Int. Cl.: H04W 12/06

(54) **AUTHENTIFICATION D'UN TERMINAL**
AUTHENTIFIZIERUNG EINES ENDGERÄTS
AUTHENTICATION OF A TERMINAL

(30) Priorité: 16.07.2008 FR 0804048
(43) Date de publication de la demande: 20.01.2010
(73) Titulaire: SOCIETE FRANCAISE DU RADIO TELEPHONE (SFR), 75015 Paris (FR)
(72) Inventeur: Bouvier, Christian, 78120 Rambouillet (FR); Teimoorzadeh, Kourosh, 28130 Bouglainval (FR)
(74) Mandataire: Debay, Damien

(56) Documents cités:
- WO-A-03/088577
- US-A1- 2007 268 908
- US-B1- 7 310 307

## Description

Le domaine de la présente invention est celui des télécommunications. Plus particulièrement, il s'agit d'un procédé, d'un système et des modes d'utilisation d'un serveur et d'un terminal mobile pour la mis en œuvre du procédé, permettant de réaliser des communications par des stations ou des bornes de liaison radiofréquence ou de liaison sans fil, de différents types et gérées par des opérateurs différents, tout en conservant un bon niveau d'authentification.

Un terminal mobile de communication par ondes radiofréquence, peut se connecter à plusieurs réseaux tels que des réseaux cellulaires GSM, GPRS, UMTS ou HSDPA. Un terminal mobile peut aussi utiliser un point d'accès public tel qu'un Hotspot Wi-Fi ou un point d'accès privé tel qu'une station privée connectée au réseau Internet et fournissant un réseau local sans fil. Pour une connexion par un point d'accès public ou privé, les procédés d'authentification sont généralement allégés pour apporter une plus grande compatibilité avec les différents utilisateurs possibles du point d'accès. Un problème est que les protocoles de communication et d'authentification proposées par les différents opérateurs gérant leur propre réseau, peuvent être incompatibles. Les utilisations des différents réseaux disponibles sont ainsi soumises à des accords de partenariat entre les différents opérateurs mais aussi à la mise en place de multiples interfaces qui permettent des connexions aux différents réseaux. Dans cette perspective, l'une des problématiques majeures concerne la complexité, la pluralité et donc l'incompatibilité des mécanismes d'identification et d'authentification des utilisateurs, mis en place par chacun des opérateurs en fonction de leurs politiques de sécurité.

Le brevet WO 03/088577 enseigne un procédé et un système d'authentification d'utilisateurs de dispositifs de transfert de données. Le procédé consiste essentiellement à analyser une demande d'accès d'un utilisateur à un service donné par des données d'identification de l'utilisateur, à vérifier la souscription de l'utilisateur, à générer un mot de passe sous réserve de la confirmation de souscription de l'utilisateur au service demandé et à envoyer un mot de passe au terminal de l'utilisateur pour des étapes ultérieures. Or, cet échange de mot de passe peut rendre complexes les connexions selon les protocoles de communication et d'authentification proposées par les différents opérateurs.

Le brevet US 7,310,307 enseigne un procédé d'authentification d'un élément tel qu'une station mobile, un PDA ou un ordinateur portable sur un réseau. De la même manière que pour le brevet précédent, le procédé propose un échange de mot de passe qui rend complexes les connexions selon les protocoles de communication et d'authentification proposées par les différents opérateurs.

Le brevet US 2007/0268908 décrit un système et un procédé pour l'évaluation de demandes d'enregistrement associées à un abonné nomade dans un réseau de convergence fixe-mobile. Cette invention n'est destinée qu'aux réseaux UMA (*Unlicensed Mobile Access* ou accès mobile sans licence). Il ne donne pas de solutions quant à une connexion sécurisée aux réseaux GSM, GPRS, UMTS ou HSDPA.

Un objet de la présente invention est donc de supprimer un ou plusieurs des inconvénients de l'art antérieur en proposant un procédé d'authentification permettant d'élargir les accès aux stations de connexion sans fil, tout en améliorant le niveau de sécurité et en conservant les modes de communication des bornes d'accès aux réseaux sans fils existantes.

Un autre objectif de la présente invention est notamment de proposer un procédé d'authentification permettant une authentification automatique et transparente vis-à-vis de l'utilisateur pour différents points d'accès publics ou privés.

Un autre objectif de la présente invention est de simplifier les mécanismes d'identification et d'authentification afin d'améliorer l'interopérabilité des différentes interfaces d'utilisateurs appartenant aux différents opérateurs.

### DESCRIPTION D L'INVENTION

Un ou plusieurs de ces objectifs sont atteints grâce au procédé d'authentification d'au moins un terminal mobile selon la revendication indépendante 1, grâce au système de la revendication indépendante 8 et grâce aux modes d'utilisation d'un serveur et d'un terminal mobile des revendications indépendantes 11 et 12 pour la mis en œuvre du procédé de la revendication 1.

L'invention, ses caractéristiques et ses avantages apparaîtront plus clairement à la lecture de la description faite en référence aux figures référencées ci-dessous et données à titre d'exemples non limitatifs :

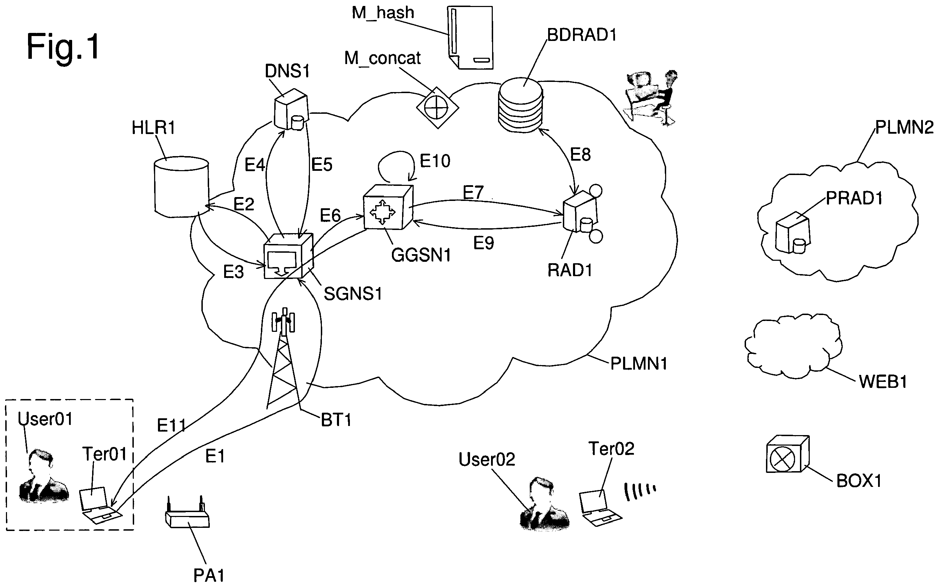

- la figure 1 représente un exemple d'échange de données lors d'une connexion au réseau cellulaire selon l'invention ;

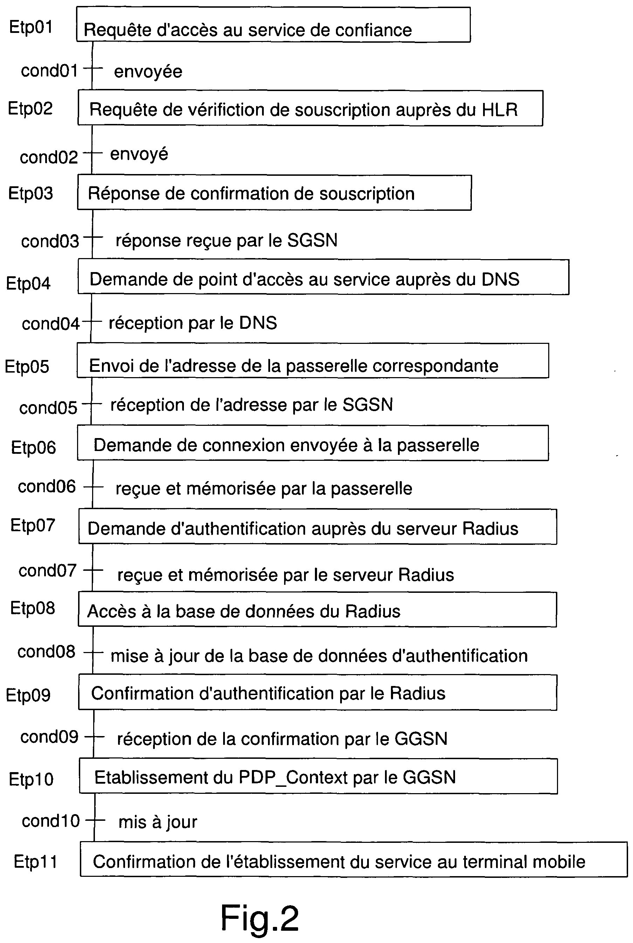

- les figures 2 et 3 représentent un exemple de procédé de mise à jour d'une base de données d'authentification selon l'invention ;
- la figure 4 représente un exemple d'échange de données pour un protocole d'identification et d'authentification par fourniture d'un identifiant et d'un mot de passe ;
- la figure 5 représente un exemple d'échange de données pour un protocole d'identification et d'authentification par fourniture d'un challenge et chiffrement par une clé secrète ;

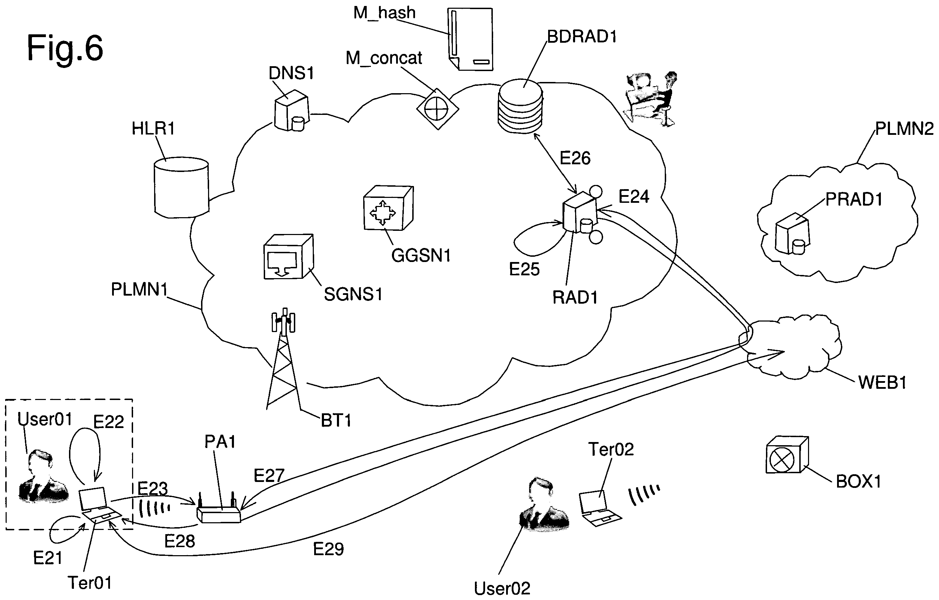

- la figure 6 représente un exemple d'échange de données lors d'une identification et une authentification par fourniture d'un identifiant et d'un mot de passe selon l'invention ;
- les figures 7 et 8 représentent un exemple de procédé d'authentification par fourniture d'un identifiant et d'un mot de passe selon l'invention ;
- la figure 9 représente un exemple de procédé d'authentification par fourniture d'un identifiant et d'un mot de passe selon l'invention ;

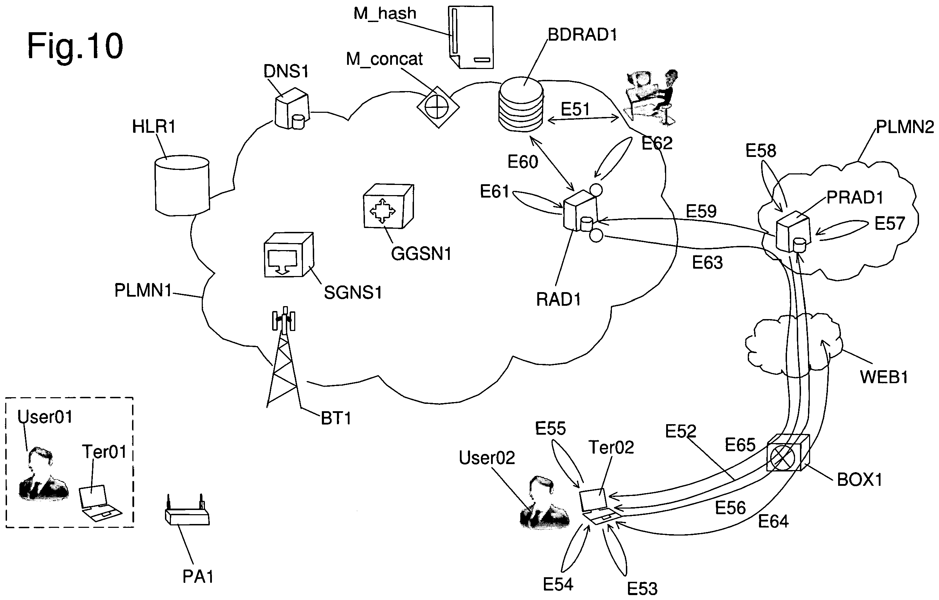

- la figure 10 représente un exemple d'échange de données lors d'une authentification par fourniture d'un challenge et chiffrement par une clé secrète selon l'invention ;

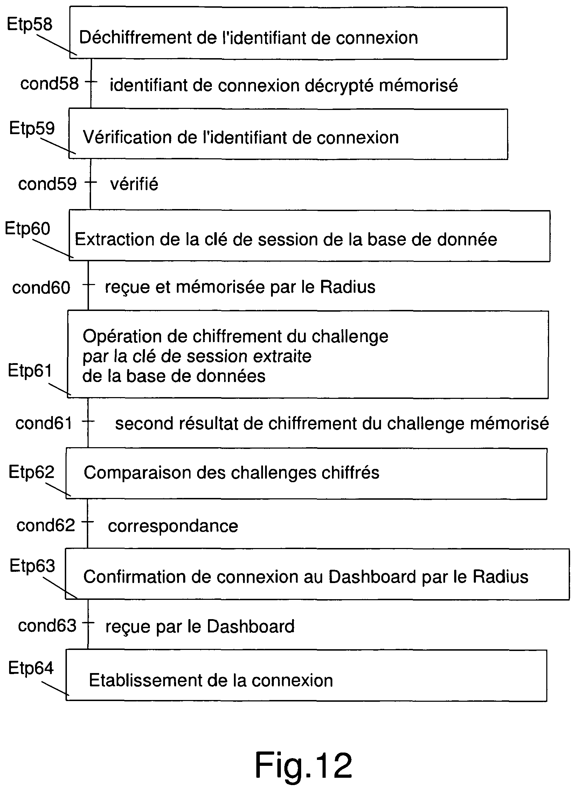

- les figures 11 et 12 représentent un exemple de procédé d'identification et d'authentification par fourniture d'un challenge et chiffrement par une clé secrète selon l'invention,
- la figure 13 représente un schéma d'un exemple de système de connexion étendu selon l'invention.

L'invention va à présent être décrite en référence aux figures précédemment citées. Un réseau de télécommunication cellulaire est, par exemple, du type GSM (Global System for Mobile Communications), GPRS (Global Packet Radio Service), UMTS (Universal Mobile Telecommunications System) ou HSDPA (High Speed Downlink Packet Access). Le réseau comprend par exemple des passerelles (GGSN1) d'accès à des serveurs (RAD1) de l'opérateur et par exemple accessibles par le réseau Internet (WEB1). Un terminal (Ter01) mobile est, par exemple, relié au réseau de communication par ondes radiofréquences, en établissant une liaison (L1) radio de communication avec une station (BT1) de liaison radiofréquence du réseau cellulaire. Cette station de liaison est, par exemple, une station de type BTS (Base Transceiver Station) ou une station de type Node B en communication avec une passerelle SGSN (Serving GPRS Support Node). Le SGSN (SGSN1) permet notamment l'acheminement des données dans le réseau GPRS et gère par exemple l'interface avec le réseau de paquets externe via la passerelle GGSN (Gateway GPRS Support Node) identifiée par son APNAME (Access Point Name), également désigné par APN.

Deux ou trois étapes sont par exemple exécutées lors d'une connexion d'un terminal mobile avec le réseau cellulaire. L'établissement de la connexion entre le terminal mobile et la station de liaison radiofréquence est par exemple réalisé par une commande d'attachement comme par exemple :
- « IMSI Attach » pour le réseau GSM ou,
- « GPRS Attach » pour le réseau GPRS ou,
- « UMTS Attach » pour le réseau UMTS.

Après cette connexion avec une station de liaison radiofréquence, une vérification des données représentatives de l'abonnement souscrit par l'utilisateur est réalisée. Cette vérification de souscription est par exemple réalisée par le nœud de gestion du réseau SGSN, auprès de la base de données d'abonnement HLR. Cette vérification de la souscription permet par exemple à l'utilisateur d'utiliser le réseau cellulaire en établissant une connexion dite connexion « Data ».

De manière non limitative, lors de l'établissement d'une connexion « Data », par exemple concernant un APNAME déterminé, la vérification de la souscription peut être complétée par une vérification suivante auprès d'une base de données dédiée au service correspondant par exemple à l'APNAME fourni par le terminal. Cette base de données dédiée est par exemple une base de données associée à un serveur Radius.

Lors d'une étape (Etp01) d'accès au service d'authentification également désigné par service de confiance, le terminal (Ter01) mobile, suite à une connexion au réseau cellulaire (PLMN1), transmet par exemple une requête (E1) d'accès à un service de confiance dédié déterminé. La requête est par exemple transmise à un SGSN (SGSN1) via une station de liaison (BT1) radiofréquence avec le terminal (Ter01) mobile. Ce service de confiance souscrit par l'utilisateur comprend au moins un service de connexion étendue et d'accès aux réseaux partenaires. Ainsi un utilisateur pourra accéder à des serveurs Internet ou naviguer sur Internet ou téléphoner ou accéder à d'autres services en se connectant via la borne d'accès réseau sans fil.

Après l'envoi (cond01) de la requête d'accès au service de confiance, le SGSN transmet par exemple lors d'une étape (Etp02) suivante, une requête (E2) de vérification de souscription au service de confiance déterminé, auprès d'une base de données (HLR1) comprenant les données d'identifiants des utilisateurs des terminaux mobiles associées à des données représentatives des abonnements souscrits par les utilisateurs.

Après l'envoi (cond02) de la requête de vérification de souscription, la base de données (HLR1) transmet, par exemple lors d'une étape suivante (Etp03) une réponse (E3) de confirmation de la souscription de l'abonné au service de confiance déterminé. Un service souscrit par l'utilisateur est par exemple indiqué par un APNAME déterminé mémorisé dans la base de données HLR et dans la carte SIM du terminal mobile. D'autre part l'utilisateur du terminal mobile est identifié par son code IMSI mémorisé dans la base de données HLR et dans la carte SIM du terminal mobile ou dans un composant électronique sécuritaire propre à l'utilisateur.

Après la réception (cond03) par le SGSN (SGSN1), du message de confirmation de souscription à l'offre de service correspondant à l'APNAME envoyé par le terminal (Ter01) mobile, le SGSN transmet par exemple lors d'une étape suivante (Etp04), une demande (E4) d'adresse de connexion à ce service, envoyée à un serveur DNS (DNS1).

Après la réception (cond04) de la requête par le DNS (Domain Name Server), le serveur DNS (DNS1) traite cette demande, lors d'une étape suivante (Etp05), et renvoie par exemple l'adresse de connexion demandée (E5) au SGSN (SGSN1). Cette adresse de connexion est par exemple une adresse IP d'une passerelle GGSN (GGSN1) permettant d'accéder au service demandé.

Après la réception (cond05) de l'adresse de la passerelle (GGSN1) correspondante, le SGSN envoie par exemple lors d'une étape suivante (Etp06), une demande (E6) de connexion à cette passerelle (GGSN1). La passerelle (GGSN1) reçoit ainsi l'identifiant de l'utilisateur et des données représentatives du contexte de connexion du terminal (Ter01) mobile. Ces données représentatives du contexte de connexion comprennent par exemple :
- l'IMSI de l'utilisateur (User01),
- l'APNAME, et
- le code P-TMSI (Packet Temporary Mobile Subscriber Identity) attribué au terminal mobile lors de sa connexion au réseau.

Après la réception et la mémorisation (cond06) de cette demande par la passerelle, la passerelle (GGSN1) envoie par exemple lors d'une étape (Etp07) suivante, une demande d'authentification (E7) vers un serveur Radius (Remote Authentication Dial-In User Service) correspondant au service désigné par l'APNAME. De manière non limitative, cette étape (Etp07) d'envoi de la demande d'authentification vers le serveur Radius (RAD1) peut être précédée d'une étape de demande d'adresse auprès d'un serveur DNS et une étape de réception de l'adresse IP du serveur Radius qui gère la base de données d'authentification.

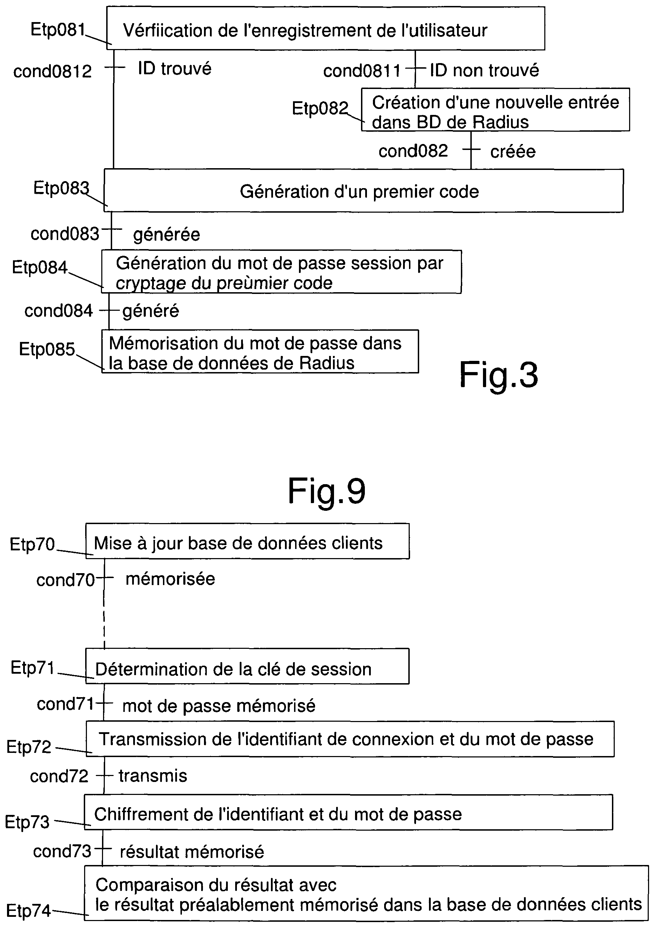

Après la réception et la mémorisation (cond07) de la demande d'authentification par ce serveur radius, le serveur Radius réalise, lors d'une étape suivante (Etp08), un accès (E8) à sa base de données (BDRAD1). De manière non limitative, comme représenté à la figure 3, cet accès comprend par exemple, plusieurs étapes (Etp081, Etp082, Etp083, Etp084, Etp085) et commence par exemple par une étape (Etp081) de vérification de l'enregistrement de l'abonné dans la base de données. Cette étape comprend par exemple une recherche dans la base de données de l'identifiant de l'utilisateur. Si l'identifiant n'est pas trouvé (cond0811) une étape (Etp082) suivante de création d'une nouvelle entrée dans la base de données est par exemple réalisée. Cette nouvelle entrée est par exemple référencée par l'identifiant de l'utilisateur. Après la création de la nouvelle entrée (cond082) la génération d'une clé de session sous la forme d'un mot de passe unique est par exemple débutée.

Si lors de la recherche de l'identifiant de l'utilisateur dans la base de données, l'identifiant est trouvé (cond0812), la génération du mot de passe unique est par exemple directement débutée.

La génération du mot de passe comprend par exemple une étape (Etp083) de génération d'un premier code obtenu à partir de données représentatives de la session débutée par l'utilisateur. Ces données de session sont par exemple des données d'identification de l'utilisateur et des données caractéristiques de la session en cours initiée par l'utilisateur. De manière non limitative, ces données peuvent par exemple être :
- le code IMSI d'identification de l'utilisateur,
- le code P-TMSI correspondant à la session initialisée par l'utilisateur,
- l'APNAME représentatif du service souscrit par l'utilisateur.

L'APNAME représente le nom du service du réseau cellulaire et sera utilisé pour une vérification avant l'établissement d'une connexion au service et l'APNAME peut aussi être utilisé comme information ou attribut supplémentaire dans le calcul du mot de passe ou de la clé de session.

D'autres données peuvent aussi être utilisées pour la création de la clé de session. De façon avantageuse, plus les données seront nombreuses et plus la clé de session sera compliquée et donc difficile à retrouvée en cas de tentative de piratage.

De manière non limitative, les différents types de données utilisées pour constituer la clé de session peuvent aussi varier. Un type de donnée nouvellement utilisé selon un protocole de communication déterminé, pourra par exemple être ajouté aux données de constitution de la clé de session. La clé créée de façon dynamique est en effet renouvelée régulièrement et peut donc prendre en compte des nouvelles données. Ces nouvelles données sont par exemple accessibles dans le terminal mobile et transmises par le terminal mobile lors d'une connexion et d'une demande d'accès au service de confiance déterminé ou accessibles depuis le réseau cellulaire par le serveur Radius de sécurité. Ainsi en modifiant le mode de création de la clé à un instant déterminé, une parade à des tentatives de décryptage des processus de sécurité peut être facilement trouvée. Une mise à jour des terminaux est par exemple aussi réalisée pour la modification du mode de génération de la clé de session dans les terminaux.

La création du premier code comprend une combinaison de ces différentes données, comme par exemple une concaténation des données selon un ordre déterminé réalisée par un module (M_concat) de concaténation. La concaténation comprend par exemple les données représentatives de l'IMSI, concaténées aux données représentatives du P-TMSI, concaténées aux données représentatives de l'APNAME représentatif du service souscrit par l'utilisateur.

Après la génération de ce premier code (cond083), une étape (Etp084) suivante de hachage de ce premier code est par exemple réalisée, par un module (M_hash) de hachage. Le résultat du hachage est, par exemple, la clé de session ou mot de passe de session. Le mot de passe est par exemple obtenu par une fonction de Hachage telle que la fonction SHA-256 (Secure Hash Algorithm) ou la fonction MD5 (Message Digest 5) ou d'autres fonctions de hachage.

Une fonction de chiffrement pourrait aussi être utilisée pour le codage du mot de passe de session. Le paramètre de chiffrement ou la clé de chiffrement utilisée est par exemple un paramètre fourni par le terminal mobile ou un paramètre obtenu à partir d'un paramètre fourni par le terminal mobile. La clé de chiffrement est ainsi transmise par le terminal mobile pour être utilisée pour le chiffrement ou cette clé peut aussi accessible depuis le réseau mobile. La clé de chiffrement est par exemple le numéro de série d'un module de gestion de la meilleure connexion disponible, ce module étant également désigné par Dashboard. Différents algorithmes peuvent être utilisés pour extraire la clé de chiffrement comme par exemple un paramètre de 128 bits ou de 256 bits.

Après la détermination de la clé de session (cond084), une étape (Etp058) suivante de mémorisation, dans la base de données d'authentification, du mot de passe de session, associé à l'identifiant d'utilisateur est, par exemple réalisée. Le mot de passe de session, associé à une nouvelle entrée est par exemple initialisé ou le mot de passe associé à une entrée déjà existante est mis à jour et renouvelé en écrasant l'ancien mot de passe.

Le mot de passe mémorisé dans la base de données d'authentification, associé à l'identifiant de l'utilisateur, est ainsi représentatif de l'utilisateur et de la session en cours ou de la dernière session initiée par l'utilisateur dans le ou les réseaux cellulaires de l'opérateur gérant la base de données d'authentification.

De manière non limitative, ce mot de passe de session peut aussi être associé à une durée de validité ou à une date limite de validité. De manière non limitative l'utilisateur est alors obligé pour l'utilisation de ce service de confiance et d'authentification, de renouveler régulièrement le mot de passe de connexion par l'initialisation d'une nouvelle session en se connectant à un réseau cellulaire géré par l'opérateur. La sécurité est ainsi encore renforcée et le moyen de renouvellement de la clé est transparent pour l'utilisateur.

De manière non limitative, selon un exemple de réalisation, l'identifiant d'utilisateur peut aussi être crypté ou chiffré et enregistré dans la base de données d'authentification.

Après la mise à jour de la base de données d'authentification (cond08), le serveur Radius (RAD1) de gestion de la base de données envoie par exemple au GGSN (GGSN1), une confirmation (E9) de mémorisation de paramètres d'authentification de l'utilisateur, lors d'une étape suivante (Etp09).

Après la réception de cette confirmation (cond09) par le GGSN, le GGSN établit par exemple le PDP Context (E10) correspondant et active le service, par exemple en mode « toujours connecté » également appelé « always on », lors d'une étape suivante (Etp10).

Après cette mise à jour (cond10), le SGSN recevant par exemple un message représentatif de cette mise à jour, envoyé par le GGSN, une confirmation (E11) de l'établissement du service de confiance et d'authentification est par exemple transmise au terminal (Ter01) par le SGSN (SGSN1), lors d'une étape (Etp11) suivante.

De manière non limitative, la confirmation de l'établissement du service de confiance comprend aussi :
- des données représentatives de la date limite de validité de la clé de session correspondant à la session en cours, ou
- des données représentatives d'une clé de cryptage utilisée pour le cryptage de l'identifiant d'utilisateur mémorisé dans la base de données d'authentification, ou
- un identifiant temporaire de l'utilisateur mémorisé dans la base de données de radius.

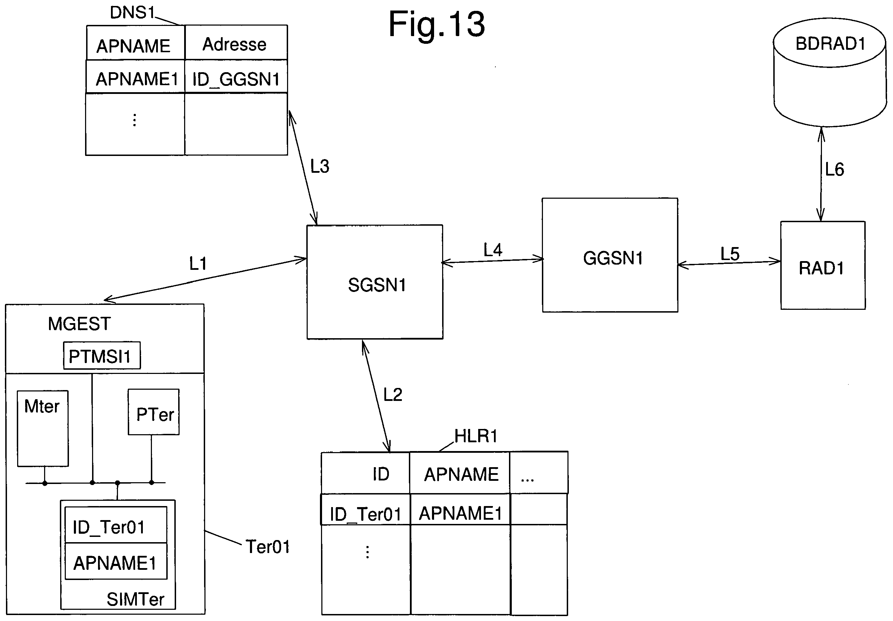

Comme représenté à la figure 13, une liaison (L1) de communication est établie entre un SGSN (SGSN1) et le terminal mobile (Ter01). Le terminal mobile comprend des données permettant, par exemple l'authentification du terminal mobile dans le réseau. Ces données utilisées par exemple pour une authentification ou une identification du terminal mobile comprennent par exemple un code (PTMSI1) temporaire par exemple de type P-TMSI mémorisé dans un module de gestion des connexions (MGEST) du terminal mobile. Le module de gestion des connexions (MGEST) du terminal exécute par exemple un programme de détermination de la meilleure connexion disponible par rapport à son débit disponible ou par rapport aux ressources utilisées ou selon d'autres critères. Ainsi en plus de renforcer l'authentification, l'accès aux ressources disponibles dans le réseau est optimisé.

Des modules ou applicatifs actifs sont par exemple réalisés chacun par un programme mémorisé et exécuté par un composant de traitement pour réaliser une ou plusieurs fonctions déterminées dans un terminal mobile ou dans un réseau. On comprend que les programmes de traitement du terminal ou du composant électronique sécuritaire ou exécutés dans un réseau, sont dotés d'au moins un sous-programme qui permet de mémoriser tous les résultats intermédiaires, obtenus successivement lors du traitement, par exemple à l'aide de tables de mémorisation. Un module exécuté peut aussi être composé de plusieurs programmes actifs. Un module peut aussi être supporté par un environnement distribué. Différents algorithmes de calcul sont respectivement utilisés par des modules de calcul agencés pour récupérer les informations adéquates (portions de données ou de signaux en cours de traitement, résultats d'opérations précédentes, etc.).

Les données utilisées par exemple pour une authentification ou une identification du terminal mobile comprennent par exemple un code d'identification (ID_Ter01) de l'utilisateur du terminal par exemple de type IMSI mémorisé dans un objet électronique sécuritaire (SIMTer) propre à l'utilisateur et inséré dans le terminal mobile. Cet objet sécuritaire est par exemple une carte SIM. De façon avantageuse, l'accès à ces données est protégé par un mot de passe connu de l'utilisateur.

Les données utilisées par exemple pour une authentification ou une identification du terminal mobile comprennent par exemple des données (APNAME1) représentatives du type de service disponible pour l'utilisateur, mémorisées dans la carte SIM. Le code est par exemple du type APNAME (Access Point Name). Le service est par exemple un accès à des serveurs WAP (Wireless Application Protocole) ou un accès à des serveurs Internet, associé à un service de connexion étendue à des bornes d'accès réseau sans fil tels que des bornes d'accès réseau radio publiques ou privées.

Différents modules de traitement permettant par exemple de réaliser des algorithmes de chiffrement ou de codage ou de hachage, sont par exemple stockés en mémoire (Mter) du terminal et exécutés par un composant (PTer) de traitement du terminal mobile (Ter01).

Le SGSN établit par exemple une liaison (L2) avec un HLR (HLR1) du réseau cellulaire comprenant par exemple en mémoire l'identifiant (ID_Ter01) de l'utilisateur du terminal mobile associé à au moins son code (APNAME1) de type d'offre de services. La base de données du HLR comprend différents champs permettant de réaliser une vérification des données d'abonnement. Ces données peuvent être fournies en partie à une autre base de données accessible, par exemple depuis le réseau Internet, et constituer une autre base de données de vérification des données d'abonnement.

Le SGSN (SGSN1) établit d'autre part une liaison (L3) avec un serveur DNS (Domain Name Server) associant, par exemple à l'APNAME, une adresse d'une passerelle GGSN associé à ce type de service. L'adresse (ID_GGSN1) de la passerelle (GGSN1) associé au type de service souscrit par l'utilisateur du terminal mobile, est ainsi automatiquement fournie au SGSN, de façon transparente pour l'utilisateur.

Une liaison (L4) de communication est alors établie entre le SGSN et le GGSN (GGSN1). L'APNAME fourni au GGSN par le SGSN, permet au GGSN de déterminer le type de service souscrit par l'utilisateur pour établir une liaison (L5) de communication avec un serveur (RAD1) de gestion de la base de données (BDRAD1) d'authentification par une liaison (L6) de communication. Ainsi à la connexion avec le serveur de gestion de la base de données d'authentification est réalisée de façon automatique et transparente pour l'utilisateur. Des authentifications lors de connexions suivantes via des bornes d'accès réseau radio publiques ou privées sont donc avantageusement facilitées voire complètement transparentes pour l'utilisateur. Les bornes d'accès réseau sans fil peuvent aussi être désignées, par exemple, par des « Hotspots Wi-Fi » ou par des points d'accès au réseau sans fil, ou par des points d'accès publics ou privés ou par des points de connexion au réseau sans fil.

De manière non limitative, l'utilisateur (User01, User02) du terminal mobile (Ter01, Ter02) souhaitant utiliser des réseaux de communication par ondes radiofréquences gérés par d'autres opérateurs, il peut être préférable de coder l'identifiant du terminal mobile de façon à fournir un identifiant temporaire à la station (BOX1) de liaison radiofréquence gérée par un opérateur tiers, pour des raisons de sécurité et de confidentialité. De manière non limitative, le terminal mobile produisant aussi un mot de passe de session codé, correspondant au mot de passe mémorisé dans la base de données d'authentification, l'identifiant codé transmis pourra être codé par une même opération de cryptage ou par une opération de cryptage différente. Ainsi un cryptage ou un hachage de plus haute sécurité pourra être utilisé pour le mot de passe de session, de façon à être irréversible. Le cryptage de l'identifiant sera par exemple réalisé pour pouvoir être décrypté par une fonction déterminée commune fournie par le serveur Radius gérant la base de données d'authentification ou ce cryptage correspondra à une fonction injective de façon à ne fournir qu'un mot de passe crypté unique propre à chaque utilisateur.

Un avantage du mot de passe de session associé à un identifiant de l'utilisateur dans la base de données d'authentification est que cette base de données (BDRAD1) peut être utilisée pour une authentification du terminal de cet utilisateur, via une borne d'accès réseau sans fil gérée par un premier opérateur gérant la base de données de sécurité. Mais cette base de données peut aussi être utilisée pour une connexion de ce même terminal via une borne d'accès réseau sans fil gérée par un second opérateur distinct du premier. Le réseau du second opérateur est par exemple simplement équipé d'un serveur Proxy Radius (PRAD1) accédant à la base (BDRAD1) de données de sécurité, via le serveur radius (RAD1) de sécurité géré par le premier opérateur.

De façon avantageuse, le mot de passe de session et l'identifiant d'utilisateur peuvent être utilisés pour différents protocoles d'identification ou d'authentification utilisés pour des bornes d'accès réseau sans fil. Ces bornes d'accès réseau sans fil sont par exemple gérées par un opérateur de téléphonie mobile ou par un opérateur de téléphonie fixe qui fournit des stations d'accès privées équipées d'une interface radiofréquence. L'utilisation de ces stations privées, également désignée par boîtier de connexion à Internet ou « Internet Box», permet notamment d'étendre la couverture radiofréquence par rapport à l'utilisation du réseau cellulaire seul.

De plus le nombre des bornes d'accès réseau sans fil, par exemple par Wi-Fi, accessibles par un utilisateur ayant souscrit un abonnement chez un opérateur, est augmenté, ces bornes d'accès réseau sans fil comprenant en plus des bornes d'accès réseau sans fil gérées par l'opérateur de téléphonie mobile, des points d'accès privés ou publics gérés par un autre opérateur de téléphonie fixe ou mobile. Ces bornes d'accès réseau sans fil ou ces points d'accès publics ou privés permettent de plus de libérer des ressources radiofréquences fournies par les réseaux cellulaires tels que GSM, GPRS, UMTS ou HSDPA,, pour tout type d'application exécutée par le terminal mobile, tout en sécurisant les accès, tandis qu'une initialisation de la base de données d'authentification est réalisée de façon particulièrement sécurisée via un réseau cellulaire géré par l'opérateur gérant la base de données d'authentification.

Le procédé et le système de connexion selon la présente invention s'appuient notamment sur trois composants distincts qui sont :
- le terminal et la carte SIM de l'utilisateur par exemple compatibles avec les réseaux GPRS/UMTS et Wi-Fi,
- un point d'accès à un service appartenant à un réseau cellulaire comme par exemple un GGSN associé à un serveur Radius gérant une borne d'accès réseau sans fil,
- un point d'accès à un service appartenant à réseau sans fil, tel qu'un réseau Wi-Fi, ce point d'accès à un service étant par exemple un serveur Radius.

En ce qui concerne les réseaux sans fil tels que Wi-Fi, le point d'accès à un service peut par exemple correspondre au dispositif de médiation entre d'une part le terminal mobile de l'utilisateur et d'autre part l'équipement donnant accès au service demandé par le client, le dispositif de médiation étant par exemple un serveur Radius.

En ce qui concerne les réseaux cellulaires, le point d'accès à un service peut par exemple correspondre au dispositif de médiation entre d'une part le terminal mobile de l'utilisateur et d'autre part l'équipement donnant accès au service demandé par le client, le dispositif de médiation étant par exemple un GGSN associé à un serveur Radius. Pour les réseaux GSM/GPRS, les données échangées avec un terminal client sont par exemple transmises via une station de liaison de type BTS, un contrôleur de cette station de type BSC (Base Station Controller) et un SGSN. Pour le réseau UMTS, les données échangées avec un terminal client sont par exemple transmises via une station de liaison de type Node B, un contrôleur de cette station de type RNC (Radio Network Controller) et un SGSN.

A titre d'exemple non limitatif, de façon avantageuse, le protocole PAP (Password Authentication Protocol) utilisé, par exemple pour l'authentification des utilisateurs de terminaux se connectant à des points d'accès publics, peut être adapté à la base de données d'authentification selon la présente invention. De manière non limitative, de façon avantageuse, le protocole CHAP (Challenge Handshake Authentication Protocol) utilisé, par exemple pour l'authentification des utilisateurs de terminaux se connectant à des points d'accès privés, peut être adapté à la base de données d'authentification selon la présente invention. Les protocoles PAP et CHAP, utilisés par exemple pour le protocole de transmission PPP (Point-to-Point Protocol) sont compatibles avec le système et le procédé de connexion selon la présente invention. D'autres protocoles d'identification ou d'authentification sont aussi compatibles avec le système et le procédé de connexion selon l'invention comme par exemple, de manière non limitative, http (HyperText Transfer Protocol) ou HttpDigest ou EAP (Extensible Authentication Protocol) ou eHash ou d'autre types de protocoles d'identification ou d'authentification.

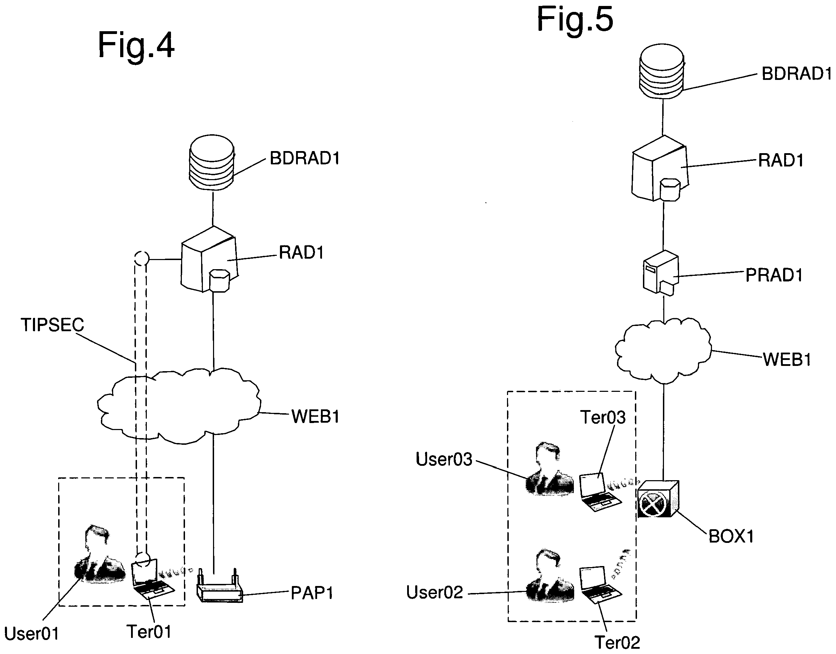

Un exemple de sécurisation par un protocole de type PAP est représenté, de manière non limitative, à la figure 4. Le protocole PAP comprend par exemple :
- une étape d'initialisation d'un tunnel (TIPSEC) sécurisé de type IPSec entre un terminal (Ter01) mobile et un serveur (RAD1) Radius gérant la borne d'accès (PA1) réseau sans fil utilisé par le terminal mobile (Ter01),
- une étape d'envoi des informations d'authentification comprenant un identifiant de connexion et un mot de passe, par le terminal (Ter01) mobile au serveur Radius,
- une étape de vérification des informations transmises par le terminal mobile, par le serveur Radius.

L'étape de vérification du couple composé de l'identifiant de connexion et du mot de passe comprend par exemple la lecture d'un mot de passe mémorisé dans une base de données et associé à l'identifiant de connexion ou à une information produite à partir de l'identifiant de connexion, puis une comparaison entre le mot de passe fourni et le mot de passe mémorisé dans la base (BDRAD1) de données. L'identifiant de connexion fourni par le terminal mobile pourra par exemple être crypté pour renforcer la sécurité. L'étape de vérification du couple composé de l'identifiant de connexion et du mot de passe peut aussi comprendre l'exécution d'une fonction de cryptage ou de chiffrement appliquée au couple fourni et la comparaison du résultat de cryptage ou de chiffrement avec une donnée de vérification mémorisée dans la base de données associée au serveur radius gérant cette borne d'accès réseau sans fil. Si le résultat du cryptage ou le mot de passe fourni correspond avec les données mémorisées, la connexion est, par exemple autorisée, sinon la connexion est refusée.

Un exemple de sécurisation par le protocole CHAP est représenté, de manière non limitative, à la figure 5. Le protocole CHAP comprend par exemple :
- une étape d'envoi d'une séquence à chiffrer également désignée par challenge, au terminal (Ter02, Ter03) en communication avec une borne d'accès (BOX1) réseau sans fil, par le serveur Radius ou un serveur Proxy Radius (PRAD1), gérant cette borne d'accès réseau sans fil, le challenge comprenant par exemple un nombre aléatoire de 16 bits et un compteur incrémenté à chaque nouvel envoi,
- une étape de hachage ou de codage ou de chiffrement du challenge par le terminal en utilisant par exemple une clé de cryptage déterminée, cette clé de cryptage étant mémorisée dans le terminal et connu par le serveur gérant la borne d'accès réseau sans fil,
- une étape d'envoi du résultat du cryptage, par le terminal, au serveur Radius ou Proxy Radius, gérant la borne d'accès réseau sans fil,
- une étape de réception et de mémorisation de ce premier résultat de cryptage,
- une étape de calcul d'un second résultat de cryptage réalisé par le serveur gérant la borne (BOX1) d'accès réseau sans fil, le cryptage étant réalisé sur le challenge envoyé et avec une clé de cryptage accessible depuis le réseau et identique à celle mémorisée par le terminal mobile,
- une étape de comparaison des résultats de cryptage pour autoriser l'accès si les résultats concordent ou refuser l'accès si les résultats diffèrent.

Le terminal fournit par exemple son identifiant dans une étape préalable de façon à ce que le serveur gérant le point de connexion sans fil puisse retrouver la clé de chiffrement associée au terminal dans une base de données accessible par le serveur gérant la borne d'accès réseau sans fil.

De manière non limitative, un utilisateur (User03, User02) voulant se connecter à Internet ou au réseau cellulaire ou à un serveur distant, via cette borne d'accès privée (BOX1), peut être équipé d'un terminal (Ter03) mémorisant une clé de chiffrement et un identifiant fournis par l'opérateur gérant cette borne d'accès privée (BOX1). Mais l'utilisateur souhaitant utiliser cette borne d'accès (BOX1) réseau sans fil peut aussi être équipé d'un terminal (Ter02) mémorisant des données à partir desquels, un identifiant et une clé de cryptage ou de chiffrement, peuvent être déterminés, de façon à vérifier des procédures de sécurité réalisées en association avec la base de données d'authentification pour des connexions étendues. Cette base de données d'authentification sera par exemple accessible par un serveur (PRAD1) Radius mandataire également désigné par serveur Proxy Radius, via un serveur (RAD1) de gestion de cette base (BDRAD1) de données.

Des exemples de procédures d'identification et d'authentification selon l'invention, conformes à des procédures de type PAP ou CHAP, vont maintenant être décrites plus en détail.

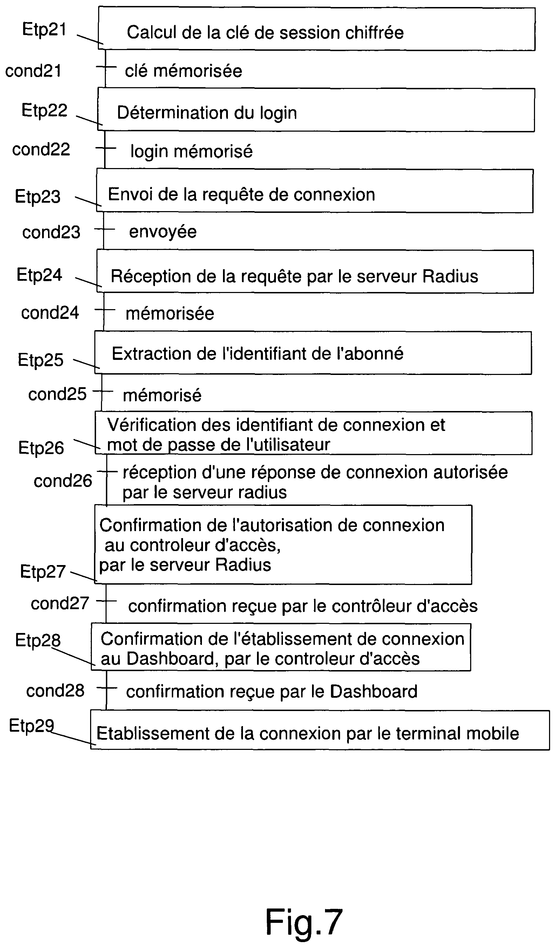

Conformément à une authentification de type PAP, comme représenté à la figure 7, le terminal exécute par exemple une étape (Etp21) de calcul (E21) de la clé de session cryptée. Cette clé est calculée à partir de données mémorisées dans la carte SIM, comme par exemple le code IMSI de l'utilisateur ou l'APNAME de l'utilisateur. Cette clé est aussi calculée à partir de données mémorisées dans le terminal et en dehors de la carte SIM, comme par exemple dans le Dashboard du terminal mobile. Les données obtenues par lecture en mémoire de la carte SIM sont avantageusement protégées par le code PIN de l'utilisateur. Les données lues sont par exemple concaténées puis une opération (E21) de hachage est par exemple appliquée à ces données concaténées. La clé de session cryptée ainsi obtenue est par exemple temporairement mémorisée dans le terminal mobile. Les opérations de détermination de la clé de session sont par exemple les mêmes que les opérations effectuées par le serveur de gestion de la base de données d'authentification lors d'initialisations ou de mises à jour réalisées dans la base de données.

Après la mémorisation de la clé de session (cond21), une étape suivante (Etp22) de détermination de l'identifiant de connexion, ou login, est par exemple exécutée. L'IMSI est par exemple lu en mémoire, puis une opération (E22) de chiffrage est par exemple appliquée à l'IMSI. De manière non limitative, la clé de chiffrement peut être le numéro de série du programme Dashboard ou son numéro de licence, lu en mémoire du terminal mobile. L'identifiant de connexion ainsi obtenu est par exemple mémorisé.

Après la mémorisation de l'identifiant de connexion (cond22), une étape suivante (Etp23) d'envoi d'une requête (E23) de connexion d'abonné, vers la borne d'accès réseau sans fil, est par exemple réalisée. La requête de connexion comprend par exemple au moins l'identifiant de connexion et le mot de passe précédemment déterminés.

Après l'envoi (cond23) de la requête de connexion comprenant un identifiant de connexion et un mot de passe, le serveur Radius réalise par exemple la réception de cette requête (E24) retransmise à l'étape (Etp24) suivante.

Après la mémorisation de la requête de connexion (cond24), le serveur Radius gérant la borne d'accès réseau sans fil, réalise de manière non limitative, une étape (Etp25) d'extraction de l'identifiant de l'utilisateur du terminal mobile. L'identifiant de l'utilisateur n'est par exemple pas transmis directement mais sous une forme codée ou cryptée et peut ainsi être décrypté (E25) pour extraire l'identifiant de l'utilisateur.

Après la mémorisation de l'identifiant de l'utilisateur du terminal mobile (cond25), une étape (Etp26) de vérification de l'identifiant de connexion et du mot de passe fournis par le terminal mobile est par exemple exécutée. De manière non limitative, la vérification peut comprendre différentes opérations comme par exemple une lecture (E26) d'un mot de passe dans une base de données ou un calcul de chiffrement à partir des données fournies par le terminal mobile pour vérifier une correspondance avec un résultat mémorisé dans une base de données.

Après par exemple la réception (cond26) d'une réponse de connexion autorisée provenant d'un serveur d'accès à la base de données d'authentification, le serveur (RAD1) de gestion de la borne d'accès réseau sans fil comme par exemple le serveur Radius, envoie par exemple une confirmation (E27) d'autorisation de connexion au contrôleur d'accès, lors d'une étape (Etp27) suivante.

Après la réception de cette confirmation (cond27), le contrôleur d'accès réalise par exemple l'envoi d'une confirmation (E28) de l'établissement d'une connexion au Dashboard (MGEST) du terminal mobile.

Après la réception (cond28) de cette confirmation par le Dashboard, le terminal établit, dans une étape (Etp29) suivante, une connexion (E29) via la borne d'accès réseau sans fil. Cette connexion permet par exemple un accès à des pages Internet ou l'accès à un service en ligne ou l'établissement d'une liaison avec le réseau cellulaire de communication. Ainsi un terminal mobile peut par exemple établir une communication téléphonique avec un terminal connecté au réseau cellulaire de communication, via un point d'accès privé ou public. Le réseau cellulaire est ainsi étendu tout en conservant un moyen d'authentification.

Deux terminaux reliés chacun à un réseau local sans fil distinct, peuvent aussi communiquer entre eux via un réseau cellulaire comme par exemple le réseau 3,5G et ainsi réaliser une passerelle sans fil de liaison entre les deux réseaux locaux sans fil. Un terminal peut aussi être relié en permanence aux deux réseaux sans fil via une station Wi-Fi suffisamment proche ou via le réseau cellulaire relié aux deux réseaux Wi-Fi. Le réseau local Wi-Fi est ainsi étendu.

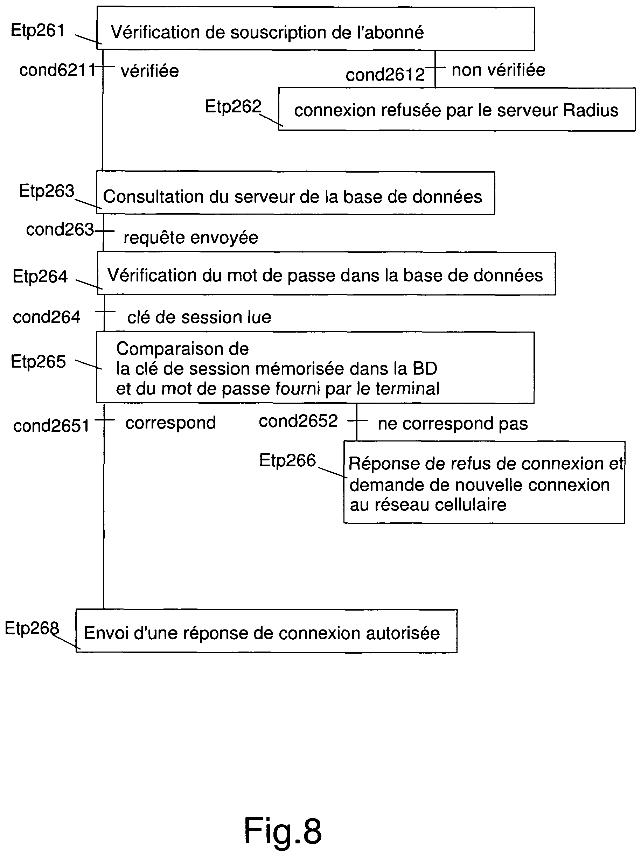

Un exemple de procédure de vérification de l'identifiant de connexion et du mot de passe selon une authentification de type PAP, va maintenant être décrite en référence à la figure 8. Le terminal demandant une connexion à la borne d'accès réseau sans fil, une étape (Etp261) de vérification de la souscription de l'abonné est par exemple exécutée. La vérification de la souscription est par exemple réalisée en fonction de l'identifiant de connexion de l'utilisateur, par une consultation de la base de données HLR. La vérification peut aussi comprendre une lecture d'un APNAME fourni par le terminal mobile.

Si la souscription de l'utilisateur n'est pas vérifiée (cond2612), le serveur gérant la borne d'accès réseau sans fil rejette par exemple la connexion dans une étape suivante (Etp262).

Si la souscription de l'utilisateur est vérifiée (cond6211), une étape (Etp263) suivante de consultation du serveur d'accès à la base d'authentification est par exemple exécutée. Une requête comprenant l'identifiant de connexion ou l'identifiant de l'utilisateur et le mot de passe fourni par le terminal mobile, est par exemple envoyée au serveur de gestion de la base de données d'authentification.

Après l'envoi de cette requête (cond263), une étape (Etp264) de vérification du mot de passe et de l'identifiant de connexion est par exemple exécutée par le dispositif de gestion de la borne d'accès réseau sans fil recevant le mot de passe en retour ou par le serveur d'accès à la base de données d'authentification. Le serveur d'accès à la base de données d'authentification réalise par exemple la vérification par lecture du mot de passe mémorisé et associé à l'identifiant transmis, dans la base de données, le serveur de gestion de la borne d'accès réseau sans fil étant par exemple un serveur Proxy Radius.

Après la lecture de la clé de session (cond264) dans la base de données d'authentification, une étape (Etp265) de comparaison de la clé mémorisée dans la base de données et du mot de passe fourni par le terminal est par exemple exécutée par le serveur d'accès à la base de données d'authentification. Si les données comparées sont les mêmes (cond2651) une étape suivante (Etp268) d'envoi d'une réponse de connexion autorisée est par exemple exécutée. Cette réponse est par exemple envoyée par le serveur de gestion de la base de données d'authentification, au serveur de gestion de la borne d'accès réseau sans fil.

Si les données comparées à l'étape (Etp265) précédente ne sont pas les mêmes (cond2652), une étape suivante (Etp266) d'envoi d'une réponse de refus de connexion est par exemple envoyée au serveur de gestion de la borne d'accès réseau sans fil.

De façon avantageuse, même si le mot de passe est transmis entre le terminal mobile et le dispositif de gestion de la borne d'accès réseau sans fil, le mot de passe étant renouvelé régulièrement, par exemple en fonction de la localisation du terminal mobile dans le réseau cellulaire, dans le cas d'un piratage ayant pour effet la capture du mot de passe, ce mot de passe capturé aurait une validité très limitée. De plus l'identifiant peut être crypté de façon à empêcher une association du mot de passe avec l'identifiant de l'utilisateur.

De manière non limitative, cette réponse de refus de connexion est par exemple associée à une demande de renouvellement de la clé de session par une nouvelle connexion du terminal au réseau cellulaire. Ainsi le terminal reçoit un message d'annonce de connexion refusée et un message demandant une nouvelle connexion au réseau cellulaire pour renouveler la clé de session. En effet le terminal mobile peut par exemple établir une connexion avec un point d'accès public ou privé, même si le terminal n'est pas dans une zone de couverture par le réseau cellulaire de communication. La clé de session sera par exemple associée à une durée de validité déterminée ou à une date limite de validité, de façon à renforcer la sécurité pour l'authentification, mais aussi pour se conformer aux données d'abonnement mémorisées dans la carte SIM de l'utilisateur.

Le message de demande de renouvellement de la clé de session peut aussi être traité automatiquement par le terminal mobile. De manière non limitative, une clé peut être à usage unique et renouvelée automatiquement à chaque nouvelle connexion de façon à renforcer la sécurité. En effet un avantage de la présente invention est que la clé de session permettant une authentification est générée de façon transparente pour l'utilisateur. Ainsi une nouvelle clé peut par exemple être obtenue par le terminal mobile en demandant une réinitialisation de sa connexion avec une station de liaison du réseau cellulaire. De manière non limitative, les données utilisées pour la détermination de la clé de session peuvent aussi comprendre des données variant en fonction de la date ou de l'heure à la quelle la connexion est réalisée ou d'autres données variables comme par exemple un compteur incrémenté dans le terminal mobile à chaque connexion et mémorisé à la réception d'une confirmation de mise à jour de la clé de session. Ce compteur utilisé, de manière non limitative, pour le cryptage de la clé de session, est par exemple transmis par le terminal, au serveur de gestion de la base de données d'authentification, lors d'une connexion au réseau cellulaire pour une génération automatique de la clé de session.

Selon un exemple de réalisation représenté à la figure 9, un procédé d'authentification de type PAP peut comprendre une étape préalable de mise à jour d'une base de données telle qu'une base de données dédiée aux clients, associant des identifiants d'utilisateurs ou des identifiants de connexion à des résultats de hachage ou de cryptage. Cette étape (Etp70) est par exemple réalisée à la suite d'une mise à jour de la base de données d'authentification. Cette étape comprend par exemple une opération de chiffrement d'une donnée fournie par le terminal mobile, comme par exemple son identifiant, à l'aide d'une clé de chiffrement étant la clé de session. Le résultat du chiffrement étant mémorisé comme mot de passe dans la base de données dédiée aux clients et associé à l'identifiant d'utilisateur. Après (cond70) la mémorisation de ce mot de passe, des étapes d'authentification du terminal mobile utilisant la base de données dédiée aux clients, pourront par exemple être réalisées par la suite.

Une étape (Etp71) de détermination de la clé de session, par le terminal mobile est par exemple réalisée. La clé de session est déterminée par lecture de données mémorisées par exemple dans la carte SIM et dans le Dashboard du terminal mobile. Ces données sont par exemple traitées par un module de concaténation et de cryptage mémorisé (MTer) et exécuté dans le terminal mobile.

Après la mémorisation de la clé de session (cond71), qui constitue le mot de passe, une étape (Etp72) suivante de transmission de l'identifiant de connexion et du mot de passe est par exemple exécutée par le terminal mobile.

Après la réception (cond72) de l'identifiant de connexion et du mot de passe par le dispositif de gestion de la borne d'accès réseau sans fil, une étape (Etp73) suivante de vérification de l'identifiant et du mot de passe est par exemple réalisée par le dispositif de gestion de la borne d'accès réseau sans fil. Cette vérification comprend par exemple une opération de chiffrement de l'IMSI à l'aide d'une clé de chiffrement étant le mot de passe transmis.

Après la mémorisation (cond73) du résultat du chiffrement, ce résultat est par exemple comparé dans une étape suivante (Etp74) au résultat mémorisé au préalable dans la base de données dédiée aux clients et associé à l'identifiant de connexion. La connexion est par exemple autorisée si les résultats sont identiques. Si les résultats de chiffrement sont différents, le dispositif de gestion de la borne d'accès réseau sans fil envoie par exemple au terminal mobile, une notification d'échec d'authentification accompagné d'une demande de nouvelle connexion au réseau cellulaire.

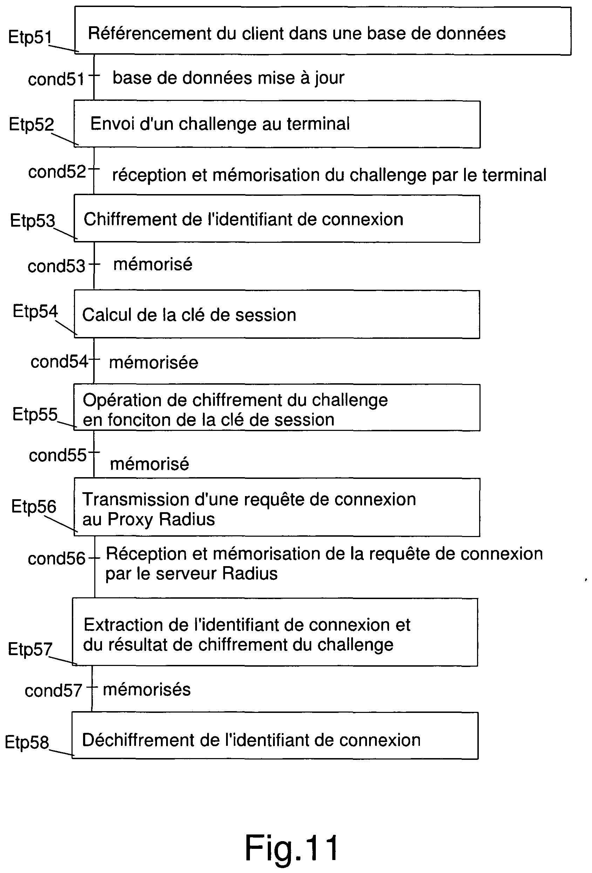

Un exemple de réalisation va maintenant être décrit conformément à une authentification de type CHAP, comme représenté à la figure 11. Une étape (Etp51) préalable de référencement du client dans une base de données est par exemple réalisée. Cette étape réalisée par exemple suite à une mise à jour d'une clé de session dans la base de données d'authentification, comprend par exemple la fourniture d'identifiants d'utilisateurs ayant souscrit à un service de connexions étendues et sécurisées, ces identifiants étant par exemple mis à disposition de serveurs d'opérateurs tiers par exemple de téléphonie fixe. Les identifiants fournis sont par exemple associés à une date ou une durée de validité et à un APNAME qui correspond aux services auxquels l'utilisateur a souscrit. L'APNAME est par exemple fourni avec l'identifiant d'utilisateur ou avec un identifiant de connexion, lors d'une connexion du terminal mobile à une borne d'accès réseau sans fil, gérée par cet opérateur tiers. Après le référencement (cond51) des utilisateurs, par exemple par une mise à jour d'une base de données, des étapes d'authentification selon un procédé de type CHAP pourront par exemple être réalisées.

Pour une borne d'accès Wi-Fi (Wireless Fidelity) ou WIMAX (Worldwide Interoperability for Microwave Access), géré par l'opérateur gérant la base de données d'authentification, le HLR pourra être accédé par le gestionnaire de la borne d'accès réseau sans fil pour vérifier la compatibilité ou la validité des services souscrits par l'utilisateur. Pour un point d'accès Wi-Fi ou WIMAX géré par un opérateur tiers, une étape préalable de fourniture de données d'utilisateurs peut être réalisée. Une base de données accessible par le gestionnaire de cette borne d'accès réseau sans fil pourra être alimentée par exemple par des identifiants d'utilisateurs associés chacun à un APNAME représentatif des services souscrits par l'utilisateur. La fourniture d'un APNAME en plus de données d'authentification lors d'une connexion à une borne d'accès réseau sans fil, par exemple Wi-Fi, public ou privé, permet de vérifier des données de souscription de l'utilisateur, en plus de données d'authentification.

Lors d'une connexion du terminal (Ter02) à la borne d'accès (BOX1) réseau sans fil, le dispositif gérant cette borne d'accès réseau sans fil exécute par exemple une étape (Etp52) d'envoi au terminal mobile, d'un message (E52) comprenant un challenge.

De manière non limitative, après (cond52) la réception et la mémorisation du challenge par le terminal mobile, une étape (Etp53) de chiffrement (E53) de l'identifiant de connexion par le terminal mobile, est par exemple réalisée.

Après (cond53) la mémorisation de l'identifiant chiffré, une étape (Etp54) de calcul (E54) de la clé de session, par le terminal mobile est par exemple exécutée. La clé de session est notamment déterminée à partir de données mémorisées dans le terminal mobile dont des données mémorisées dans la carte SIM du terminal mobile et dont l'accès est protégé. Un module de concaténation et de chiffrement, mémorisé et exécuté dans le terminal mobile, permet par exemple de déterminer la clé de session.

Après la mémorisation de la clé de session (cond54), une étape suivante (Etp55) de chiffrement (E55) du challenge à l'aide d'une clé de chiffrement étant la clé de session calculée par le terminal mobile, est par exemple exécutée.

Après la mémorisation du résultat de chiffrement du challenge (cond55), une étape (Etp56) de transmission d'une requête (E56) de connexion au dispositif de gestion de la borne d'accès réseau sans fil, comme par exemple le serveur Proxy Radius (PRAD1), est par exemple exécutée. Cette requête comprend notamment un identifiant de connexion associé au résultat de chiffrement du challenge.

Après la réception et la mémorisation (cond56) de cette requête par le dispositif gérant la borne d'accès réseau sans fil, comme par exemple le serveur Proxy Radius, une étape suivante (Etp57) d'extraction (E57) de l'identifiant de connexion et du résultat du chiffrement du challenge, est par exemple réalisée.

Après la mémorisation (cond57) de l'identifiant et du résultat de chiffrement du challenge, une étape (Etp58) suivante de déchiffrement (E58) de l'identifiant de connexion est par exemple réalisée.

Après le déchiffrement de l'identifiant de connexion (cond58), une étape suivante (Etp59) de vérification de l'identifiant de connexion est par exemple réalisée par le dispositif de gestion de la borne d'accès réseau sans fil. Pour cela, le dispositif de gestion de la borne d'accès réseau sans fil interroge (E59) par exemple un serveur (RAD1) du réseau cellulaire ou la base de données préalablement mise à jour.

Si la vérification ne peut être réalisée, par exemple en raison de l'absence de données d'identification de l'utilisateur du terminal mobile, dans une base de données associée, la requête de l'utilisateur est par exemple rejetée.

Si (cond59) les données d'identification de l'utilisateur peuvent être retrouvées et sont associées à des données représentatives d'une souscription au service de connexion étendue, une étape suivante (Etp60) d'extraction (E60) de la clé de session mémorisée dans la base de données, est par exemple exécutée par exemple par le dispositif de gestion de la base de données.

Après la réception et la mémorisation (cond60) de la clé de session provenant de la base de données d'authentification, une étape (Etp61) suivante de chiffrement (E61) du challenge envoyé au terminal mobile à l'aide de la clé de chiffrement étant la clé de session fournie par la base de données d'authentification, est par exemple exécutée.

Après la mémorisation (cond61) de ce second résultat de chiffrement du challenge, une étape suivante (Etp62) de comparaison (E62) des résultats de chiffrement du challenge est par exemple exécutée. Les challenges chiffrés d'une part par le terminal mobile et d'autre part par le dispositif de gestion de la borne d'accès réseau sans fil ou par le serveur d'accès à la base de données d'authentification, sont ainsi comparés l'un à l'autre pour déterminer en cas d'égalité (cond62) que l'authentification a réussie. Si les challenges chiffrés diffèrent, l'authentification échoue et le dispositif de gestion de la base de données envoie par exemple au terminal mobile, via le dispositif de gestion de la borne d'accès réseau sans fil, un message d'échec d'authentification et une demande renouvellement automatique de la clé de session, par une nouvelle connexion au réseau cellulaire.

Après un succès de l'authentification, une étape (Etp63) de confirmation (E63) de la connexion au Dashboard du terminal mobile, est par exemple réalisée par le dispositif de gestion de la borne d'accès réseau sans fil.

Après la réception (cond63) de la confirmation par le Dashboard, une étape (Etp64) de connexion (E64) est par exemple exécutée. La connexion établie par le terminal mobile est par exemple établie avec un serveur ou avec des pages Internet ou avec un autre terminal.

De façon particulièrement avantageuse, le procédé et le système selon l'invention permettent :
- un partage d'un secret entre le poste client, comme par exemple le terminal mobile, et le dispositif de contrôle d'identification et d'authentification du côté réseau,
- une simplification du parcours client dû notamment à un partage transparent et automatique du secret,
- une sécurité renforcée notamment grâce à une mise à jour automatique du secret et à des échanges chiffrés,
- une compatibilité avec des protocoles d'authentification ou d'identification notamment grâce au partage de secrets entre les dispositifs de contrôle de l'opérateur du réseau cellulaire et des opérateurs partenaires gérant des réseaux sans fil.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'authentification d'au moins un terminal (Ter01, Ter02) mobile capable de communiquer avec des stations (BT1) de liaison radiofréquence d'au moins un réseau (PLMN1) cellulaire de communication par ondes radiofréquences, le terminal étant capable de communiquer d'autre part avec au moins une borne (BOX1, PA1) d'accès réseau sans fil gérée par un dispositif de gestion du type point d'accès à un service, le procédé comprenant une étape de connexion à une des stations du réseau cellulaire, un mot de passe étant déterminé par un module de calcul du réseau cellulaire, à partir de données transmises, par le terminal mobile ou par un nœud de gestion dans le réseau cellulaire, **caractérisé en ce que** le terminal mobile mémorisant un type (APNAME1) déterminé de service disponible pour un utilisateur du terminal mobile, ce type de service étant fourni par le terminal mobile, pour la connexion avec la station (BT1) du réseau cellulaire, la connexion à la station du réseau cellulaire est suivie d'une étape d'initialisation ou de mise à jour d'une base de données d'authentification mémorisant des données d'identification de l'utilisateur du terminal associées au mot de passe, ces données transmises comprenant au moins un identifiant (ID_Ter01) mémorisé par le terminal mobile et un code (PTMSI1) temporaire mémorisé par le terminal mobile et déterminé par ledit noeud de gestion en fonction de la connexion établie entre le terminal mobile et le réseau cellulaire, l'étape d'initialisation ou de mise à jour de la base de données d'authentification étant suivie d'une étape d'accès à la base (BDRAD1) de données d'authentification par le dispositif de gestion du type point d'accès à un service, pour réaliser une authentification de l'utilisateur du terminal se connectant à la borne (BOX1, PAP1) d'accès réseau sans fil,
le terminal (Ter01) étant authentifié, lors de sa connexion à la borne d'accès réseau sans fil, par au moins :
- une étape (Etp21) de détermination, par un module de calcul du terminal mobile, des données d'identification de l'utilisateur et du mot de passe déterminé par au moins l'identifiant de l'utilisateur du terminal mobile et par le code temporaire fonction de la précédente connexion établie entre le terminal mobile et le réseau cellulaire,
- une étape (Etp23) de fourniture au dispositif de gestion de la borne d'accès réseau sans fil, du mot de passe associé aux données d'identification de l'utilisateur, par le module de calcul du terminal,
- une étape (Etp26) de vérification, par le dispositif de gestion de la borne d'accès réseau sans fil, du mot de passe et des données d'identification fournis par le terminal mobile lors de l'étape (Etp23) de fourniture, en fonction des données mémorisées dans la base de données d'authentification lors de l'étape d'initialisation ou de mise à jour de la base de données d'authentification suivant le précédent accès du terminal au réseau cellulaire, pour autoriser la connexion du terminal mobile à la borne d'accès réseau sans fil, en cas de correspondance.

2. Procédé selon la revendication 1, **caractérisé en ce que** le mot de passe est obtenu par au moins :
- une étape (Etp083) de concaténation de l'identifiant de l'utilisateur qui correspond au code IMSI mémorisé dans un objet sécuritaire propre à l'utilisateur et inséré dans le terminal mobile, l'objet sécuritaire autorisant l'activation du terminal mobile après l'entrée d'un mot de passe connu de l'utilisateur, le code IMSI étant concaténé au code temporaire qui correspond au code P-TMSI, concaténé au type de service qui correspond au code APNAME et éventuellement concaténé à d'autres données telles qu'un numéro de licence d'un module d'optimisation des connexions du terminal mobile, ou un numéro de série de ce module d'optimisation des connexions,
- une étape (Etp084) de hachage des données concaténées, le résultat de hachage étant mémorisé comme le mot de passe.

3. Procédé selon la revendication 1 ou 2, **caractérisé en ce que** les données d'identification de l'utilisateur sont transmises sous forme codée, un codage étant réalisé lors d'une étape de codage des données d'identification de l'utilisateur précédant l'étape (Etp23) de fourniture du mot de passe associé aux données d'identification de l'utilisateur et l'étape de vérification du mot de passe et des données d'identification, étant précédée d'une étape de décodage des données d'identification codées ou l'étape (Etp23) de fourniture du mot de passe associé aux données d'identification de l'utilisateur est précédée d'une étape d'établissement d'un tunnel chiffré entre le terminal mobile et le dispositif de gestion de la borne d'accès réseau sans fil, réalisant le codage des données d'identification.

4. Procédé selon la revendication 1 ou 2, **caractérisé en ce que** le terminal (Ter01) établit une connexion sécurisée à la borne d'accès réseau sans fil, par au moins :
- une étape de détermination, par un module de calcul du terminal mobile, du mot de passe déterminé par au moins l'identifiant de l'utilisateur du terminal mobile et par le code temporaire fonction de la connexion établie entre le terminal mobile et le réseau cellulaire,
- une étape d'établissement d'un tunnel chiffré (TIPSEC) à l'aide du mot de passe précédemment déterminé, entre le terminal mobile et le dispositif de gestion (RAD1) de la borne d'accès réseau sans fil.

5. Procédé selon la revendication 1 ou 2, **caractérisé en ce que** le terminal est authentifié, lors de sa connexion à la borne d'accès réseau sans fil, par au moins :
- une étape (Etp52) de fourniture d'une séquence déterminée envoyée par le dispositif de gestion de la borne d'accès réseau sans fil, au terminal mobile,
- une étape de détermination, par un module de calcul du terminal mobile, des données d'identification de l'utilisateur et du mot de passe déterminé par au moins l'identifiant de l'utilisateur du terminal mobile et par le code temporaire fonction de la connexion établie entre le terminal mobile et le réseau cellulaire,
- une étape (Etp55) de chiffrement de la séquence reçue par le terminal mobile, le mot de passe réalisant une première clé de chiffrement,
- une étape d'envoi au dispositif de gestion de la borne d'accès réseau sans fil, par le terminal mobile, de la séquence chiffrée à l'aide de la première clé de chiffrement,
- une étape de réception et de mémorisation, par le dispositif de gestion de la borne d'accès réseau sans fil, de la séquence chiffrée par la première clé de chiffrement,
- une étape (Etp61) de chiffrement, par le dispositif de gestion, de la séquence déterminée à l'aide du mot de passe mémorisé dans la base de données d'authentification réalisant une seconde clé de chiffrement,
- une étape (Etp62) de comparaison de la séquence chiffrée par la première clé de chiffrement et de la séquence chiffrée par la seconde clé de chiffrement pour autoriser la connexion du terminal mobile à la borne d'accès réseau sans fil, en cas de correspondance.

6. Procédé selon l'une des revendications 1 à 5, **caractérisé en ce qu'**il comprend une étape (Etp59) de vérification par le dispositif de gestion de la borne d'accès réseau sans fil, du type de service fourni lors d'une demande de connexion à la borne d'accès réseau sans fil, la vérification étant réalisée auprès d'un serveur d'une base de données d'abonnement mémorisant des données d'identification d'utilisateurs associées à des données représentatives de services souscrits, une demande de connexion à la borne d'accès réseau sans fil étant rejetée si le type de service fourni par le terminal mobile ne correspond pas à un type de service mémorisé dans la base de données d'abonnement associé aux données d'identification de l'utilisateur, ou si le type de service fourni par le terminal mobile n'est pas représentatif d'un service de connexions étendues par des bornes d'accès réseau sans fil.

7. Procédé selon l'une des revendications 1 à 6, **caractérisé en ce qu'**il comprend, en cas d'échec d'authentification du terminal mobile par le dispositif de gestion de la borne d'accès réseau sans fil, une étape d'envoi au terminal mobile d'une demande de mise à jour de son mot de passe par une nouvelle connexion au réseau cellulaire, le procédé de connexion comprenant, en cas de succès d'authentification du terminal mobile par le dispositif de gestion de la borne d'accès réseau sans fil, une étape (Etp64, Etp29) d'établissement d'une connexion par le terminal mobile via la borne d'accès réseau sans fil.

8. Système d'authentification d'au moins un terminal mobile capable de communiquer avec des stations (BT1) de liaison radiofréquence d'au moins un réseau (PLMN1) cellulaire de communication par ondes radiofréquences, le terminal étant capable de communiquer d'autre part avec au moins une borne d'accès réseau sans fil (PA1, BOX1) gérée par un dispositif de gestion du type point d'accès à un service, **caractérisé en ce que** le terminal mobile mémorisant un type (APNAME1) déterminé de service disponible pour un utilisateur du terminal mobile, ce type de service étant fourni par le terminal mobile, lors d'une connexion avec une des stations du réseau cellulaire, la connexion à la station du réseau cellulaire permet une activation d'un module d'initialisation ou de mise à jour d'une base (BDRAD1) de données d'authentification mémorisant des données d'identification de l'utilisateur du terminal associées à un mot de passe, ce mot de passe étant déterminé par un module de calcul du réseau cellulaire, à partir de données transmises par le terminal mobile ou par un nœud de gestion dans le réseau cellulaire, ces données transmises comprenant au moins un identifiant (ID_Ter01) mémorisé par le terminal mobile et un code (PTMSI1) temporaire mémorisé par le terminal mobile et déterminé par ledit nœud de gestion en fonction de la connexion établie entre le terminal mobile et le réseau cellulaire, la base de données d'authentification étant accessible par le dispositif de gestion du type point d'accès à un service, pour réaliser une authentification de l'utilisateur du terminal se connectant à la borne d'accès réseau sans fil, ladite connexion étant autorisée si les données fournies par le terminal mobile à la borne d'accès réseau sans fil (PA1, BOX1) correspondent aux données mémorisées par la base (BDRAD1) de données d'authentification lors de ladite connexion, précédente, du terminal mobile avec une des stations du réseau cellulaire.

9. Système selon la revendication 8, **caractérisé en ce que** le mot de passe est obtenu par concaténation de l'identifiant de l'utilisateur qui correspond au code IMSI mémorisé dans un objet sécuritaire (SIMTer) propre à l'utilisateur et inséré dans le terminal (Ter01) mobile, l'objet sécuritaire autorisant l'activation du terminal mobile après l'entrée d'un mot de passe connu de l'utilisateur, le code IMSI étant concaténé au code temporaire qui correspond au code P-TMSI, concaténé au type de service qui correspond au code APNAME et éventuellement concaténé à d'autres données telles qu'un numéro de licence d'un module (MGEST) d'optimisation des connexions du terminal mobile, ou un numéro de série de ce module d'optimisation des connexions, un module de hachage réalisant ensuite un hachage des données concaténées, le résultat de hachage étant mémorisé comme le mot de passe.

10. Système selon la revendication 8 ou 9, **caractérisé en ce que** le dispositif de gestion de la borne d'accès réseau sans fil comprend un serveur mandataire (PRAD1) communiquant avec un serveur (RAD1) de gestion de la base (BDRAD1) de données d'authentification pour consulter la base de données d'authentification.

11. Utilisation d'un serveur de gestion d'une base (BDRAD1) de données d'authentification, pour la mise en œuvre du procédé selon une des revendications 1 à 7, **caractérisé en ce que** le serveur de gestion de la base de données d'authentification étant accessible par le dispositif de gestion du type point d'accès à un service, pour réaliser une authentification de l'utilisateur du terminal se connectant à la borne d'accès réseau sans fil.

12. Utilisation d'un terminal mobile pour la mise en œuvre du procédé selon une des revendications 1 à 7, **caractérisé en ce que** le terminal mobile comprend un module de calcul du mot de passe déterminé par au moins l'identifiant mémorisé par le terminal mobile et par le code temporaire fonction de la connexion établie entre le terminal mobile et le réseau cellulaire, une authentification étant réalisée lors d'une connexion à la borne d'accès réseau sans fil, selon un protocole d'authentification basé sur au moins le mot de passe calculé par le terminal mobile et mémorisé dans la base de données d'authentification.

13. Utilisation d'un terminal mobile selon la revendication 12, **caractérisé en ce que** le mot de passe est déterminé, dans le terminal mobile, en fonction de l'identifiant de l'utilisateur du terminal mobile, qui correspond au code IMSI mémorisé dans un objet sécuritaire (SIMTer) propre à l'utilisateur et inséré dans le terminal mobile, l'objet sécuritaire autorisant l'activation du terminal mobile (Ter01) après l'entrée d'un mot de passe connu de l'utilisateur.

## Patentansprüche

1. Verfahren zum Authentifizieren mindestens eines mobilen Endgeräts (Ter01, Ter02), das dazu geeignet ist, mit Funkfrequenzverbindungsstationen (BT1) von mindestens einem Mobilkommunikationsnetz (PLMN1) durch Radiofrequenzwellen zu kommunizieren, wobei das Endgerät anderseits dazu geeignet ist, mit mindestens einer drahtlosen Netzwerkzugangsstation (PA1, BOX1) zu kommunizieren, die durch ein Verwaltungsgerät der Art des Dienstzugangspunkts verwaltet wird, wobei das Verfahren einen Verbindungsschritt zu einer der Stationen des Mobilfunknetzes umfasst, wobei ein Passwort durch ein Berechnungsmodul des Mobilfunknetzes aus von dem Endgerät oder einem Verwaltungsknoten im Mobilfunknetz übertragenen Daten von einem Berechnungsmodul des Mobilfunknetzes bestimmt wird, **dadurch gekennzeichnet, dass** das mobile Endgerät eine bestimmte Art (APNAME1) von für einen Benutzer des mobilen Endgeräts verfügbarem Dienst speichert, wobei diese Art von Dienst von dem mobilen Endgerät für die Verbindung zu der Station (BT1) des Mobilfunknetzes bereitgestellt wird, wobei auf die Verbindung zu der Station des Mobilfunknetzes ein Schritt der Initialisierung oder Aktualisierung einer Authentifizierungsdatenbank folgt, in der Identifikationsdaten des Benutzers des Endgeräts gespeichert sind, die mit dem Passwort verbunden sind, wobei die übertragenen Daten mindestens einen von dem mobilen Endgerät gespeicherten Benutzernamen (ID_Ter01) und einen von dem mobilen Endgerät gespeicherten und von dem Verwaltungsknoten abhängig von der zwischen dem mobilen Endgerät und dem Mobilfunknetz hergestellten Verbindung bestimmten temporären Code (PTMSI1) umfassen, wobei auf den Schritt der Initialisierung oder Aktualisierung der Authentifizierungsdatenbank ein Schritt des Zugriffs auf die Authentifizierungsdatenbank (BDRAD1) durch das Verwaltungsgerät der Art des Dienstzugangspunkts folgt, um ein Authentifizieren des sich an die drahtlose Netzwerkzugangsstation (BOX1, PA1) verbindenden Benutzers durchzuführen,
wobei das Endgerät (Ter01) während seiner Verbindung zu der drahtlosen Netzwerkzugangsstation durch mindestens Folgendes authentifiziert wird:
- einen Schritt (Etp21) des Bestimmens durch ein Berechnungsmodul des mobilen Endgeräts der Identifizierungsdaten des Benutzers und des von mindestens dem Benutzernamen des Benutzers des mobilen Endgeräts und dem abhängig von der zwischen dem mobilen Endgerät und dem Mobilfunknetz vorherigen hergestellten Verbindung temporären Code bestimmten Passwortes,
- einen Schritt (Etp23) des Bereitstellens an das Verwaltungsgerät der Netzwerkzugangsstation durch das Berechnungsmodul des Endgeräts des mit den Identifikationsdaten des Benutzers verbundenen Passwortes,
- einen Schritt (Etp26) des Überprüfens durch das Verwaltungsgerät der Netzwerkzugangsstation des Passwortes und der während des Schritts (Etp23) des Bereitstellens von dem mobilen Endgerät bereitgestellten Identifikationsdaten, abhängig von den in der Authentifizierungsdatenbank während des Initialisierungs- oder Aktualisierungsschritts der Authentifizierungsdatenbank nach dem vorherigen Zugriff des Endgeräts auf das Mobilfunknetz gespeicherten Daten, um im Falle einer Übereinstimmung die Verbindung des mobilen Endgeräts zu der drahtlosen Netzwerkzugangsstation zu autorisieren.

2. Verfahren nach Anspruch 1, **dadurch gekennzeichnet, dass** das Passwort mindestens durch Folgendes festgelegt wird:
- einen Schritt (Etp083) der Verkettung des Benutzernamens, der dem in einem benutzerspezifischen Sicherheitsobjekt gespeicherten IMSI-Code entspricht und in das mobile Endgerät eingegeben wird, wobei das Sicherheitsobjekt die Aktivierung des mobilen Endgeräts nach der Eingabe eines dem Benutzer bekannten Passworts autorisiert, wobei der IMSI-Code mit dem temporären Code verkettet wird, der dem P-TMSI-Code entspricht, der mit der Art von Dienst verkettet ist, die dem APNAME-Code entspricht und eventuell mit anderen Daten wie einer Lizenznummer eines Moduls zur Optimierung der Verbindungen des mobilen Endgeräts, oder einer Seriennummer dieses Moduls zur Optimierung der Verbindungen verkettet,
- einen Schritt (Etp84) des Hashing der verketteten Daten, wobei das Ergebnis des Hashing als Passwort gespeichert wird.

3. Verfahren nach Anspruch 1 oder 2, **dadurch gekennzeichnet, dass** die Benutzeridentifikationsdaten in codierter Form übertragen werden, wobei die Codierung während eines Codierungsschritts der Benutzeridentifikationsdaten vor dem Schritt (Etp23) des Bereitstellens des mit den Identifikationsdaten des Benutzers verbundenen Passwortes und dem Schritt des Verifizierens des Passwortes und der Identifikationsdaten durchgeführt wird, wobei ihm ein Schritt des Decodierens der codierten Identifikationsdaten vorausgeht oder dem Schritt (Etp23) des Bereitstellens des mit den Identifikationsdaten des Benutzers verbundenen Passwortes ein Schritt des Einrichtens eines verschlüsselten Tunnels zwischen dem mobilen Endgerät und dem Verwaltungsgerät der Netzwerkzugangsstation vorausgeht, der die Codierung der Benutzeridentifikationsdaten durchführt.

4. Verfahren nach Anspruch 1 oder 2, **dadurch gekennzeichnet, dass** das Endgerät (Ter01) eine sichere Verbindung zu der drahtlosen Netzwerkzugangsstation durch Folgendes herstellt:
- einen Schritt des Bestimmens durch ein Berechnungsmodul des mobilen Endgeräts des von mindestens dem Benutzernamen des Benutzers des mobilen Endgeräts und dem abhängig von der zwischen dem mobilen Endgerät und dem Mobilfunknetz hergestellten Verbindung temporären Code bestimmten Passwortes,
- einen Schritt des Einrichtens eines verschlüsselten Tunnels (TIPSEC) mit dem zuvor bestimmten Passwort zwischen dem mobilen Endgerät und dem Verwaltungsgerät (RAD1) der drahtlosen Netzwerkzugangsstation.

5. Verfahren nach Anspruch 1 oder 2, **dadurch gekennzeichnet, dass** das Endgerät während seiner Verbindung zu der drahtlosen Netzwerkzugangsstation durch mindestens Folgendes authentifiziert wird:
- einen Schritt (Etp52) des Bereitstellens einer von dem Verwaltungsgerät der drahtlosen Netzwerkzugangsstation gesendeten bestimmten Sequenz an das mobile Endgerät,
- einen Schritt des Bestimmens durch ein Berechnungsmodul des mobilen Endgeräts der Identifizierungsdaten des Benutzers und des von mindestens dem Benutzernamen des Benutzers des mobilen Endgeräts und dem abhängig von der zwischen dem mobilen Endgerät und dem Mobilfunknetz hergestellten Verbindung temporären Code bestimmten Passwortes,
- einen Schritt (Etp55) des Verschlüsselns der von dem mobilen Endgerät empfangenen Sequenz, wobei das Passwort ein erster Verschlüsselungsschlüssel ist,
- einen Schritt des Sendens an das Verwaltungsgerät der drahtlosen Netzwerkzugangsstation durch das mobile Endgerät der verschlüsselten Sequenz mit dem ersten Verschlüsselungsschlüssel,
- einen Schritt des Empfangens und des Speicherns durch das Verwaltungsgerät der drahtlosen Netzwerkzugangsstation der durch den ersten Verschlüsselungsschlüssel verschlüsselten Sequenz,
- einen Schritt (Etp61) des Verschlüsselns durch das Verwaltungsgerät der bestimmten Sequenz mit dem in der Authentifizierungsdatenbank gespeicherten Passwort, das ein zweiter Verschlüsselungsschlüssel ist,
- einen Schritt (Etp62) des Vergleichens der durch den ersten Verschlüsselungsschlüssel verschlüsselten Sequenz mit der durch den zweiten Verschlüsselungsschlüssel verschlüsselten Sequenz, um im Falle einer Übereinstimmung die Verbindung des mobilen Endgeräts zu der drahtlosen Netzwerkzugangsstation zu autorisieren.

6. Verfahren nach einem der Ansprüche 1 bis 5, **dadurch gekennzeichnet, dass** es einen Schritt (Etp59) umfasst des Überprüfens durch das Verwaltungsgerät der drahtlosen Netzwerkzugangsstation der Art des gelieferten Diensts, wenn eine Verbindung zu der drahtlosen Netzwerkzugangsstation angefordert wird, wobei das Überprüfen über einen Server einer Abonnementdatenbank durchgeführt wird, in der Benutzeridentifikationsdaten gespeichert sind, die mit repräsentativen Daten der abonnierten Dienste verbunden sind, wobei eine Anforderung zur Verbindung zu der drahtlosen Netzwerkzugangsstation abgelehnt wird, wenn die Art des von dem mobilen Endgerät gelieferten Diensts keiner Art von in der Abonnementdatenbank gespeicherten Dienste entspricht, die mit den Benutzeridentifikationsdaten verbunden ist, oder wenn die Art des von dem mobilen Endgerät gelieferten Diensts nicht für einen erweiterten Verbindungsdienst durch drahtlose Netzwerkzugangsstationen repräsentativ ist.

7. Verfahren nach einem der Ansprüche 1 bis 6, **dadurch gekennzeichnet, dass** es im Falle eines Authentifizierungsfehlers des mobilen Endgeräts durch das Verwaltungsgerät der drahtlosen Netzwerkzugangsstation einen Schritt des Sendens einer Aufforderung an das mobile Endgerät, sein Passwort durch eine erneute Verbindung zum Mobilfunknetz zu aktualisieren, umfasst, wobei das Verbindungsverfahren bei erfolgreicher Authentifizierung des mobilen Endgeräts durch das Verwaltungsgerät der drahtlosen Netzwerkzugangsstation einen Schritt (Etp64, Etp29) des Herstellens einer Verbindung durch das mobile Endgerät über die drahtlose Netzwerkzugangsstation umfasst.

8. System zur Authentifizierung von mindestens einem mobilen Endgerät, das dazu geeignet ist, mit Funkfrequenzverbindungsstationen (BT1) von mindestens einem Mobilkommunikationsnetz (PLMN1) durch Radiofrequenzwellen zu kommunizieren, wobei das Endgerät anderseits dazu geeignet ist, mit mindestens einer drahtlosen Netzwerkzugangsstation (PA1, BOX1) zu kommunizieren, die durch ein Verwaltungsgerät der Art des Dienstzugangspunkts verwaltet wird, **dadurch gekennzeichnet, dass** das mobile Endgerät eine bestimmte Art (APNAME1) von für einen Benutzer des mobilen Endgeräts verfügbarem Dienst speichert, wobei diese Art von Dienst von dem mobilen Endgerät während einer Verbindung zu einer der Stationen des Mobilfunknetzes bereitgestellt wird, die Verbindung zu der Station des Mobilfunknetzes ermöglicht die Aktivierung eines Initialisierungs- oder Aktualisierungsmoduls einer Authentifizierungsdatenbank (BDRAD1), in der Identifikationsdaten des Benutzers des Endgeräts gespeichert sind, die mit einem Passwort verbunden sind, wobei dieses Passwort durch ein Berechnungsmodul des Mobilfunknetzes aus von dem mobilen Endgerät oder von dem Verwaltungsknoten in dem Mobilfunknetz übertragenen Daten bestimmt wird, wobei die übertragenen Daten mindestens einen von dem mobilen Endgerät gespeicherten Benutzernamen (ID_Ter01) und einen von dem mobilen Endgerät gespeicherten und von dem Verwaltungsknoten abhängig von der zwischen dem mobilen Endgerät und dem Mobilfunknetz hergestellten Verbindung bestimmten temporären Code (PTMSI1) umfassen, wobei die Authentifizierungsdatenbank über das Verwaltungsgerät der Art des Dienstzugangspunkts zugreifbar ist, um ein Authentifizieren des sich an die drahtlose Netzwerkzugangsstation verbindenden Benutzers durchzuführen, wobei die Verbindung autorisiert wird, wenn die von dem mobilen Endgerät an die drahtlose Netzwerkzugangsstation (PA1, BOX1) übertragenen Daten mit den in der Authentifizierungsdatenbank (BDRAD1) während der vorherigen Verbindung des mobilen Endgeräts zu einer der Stationen des Mobilfunknetzes gespeicherten Daten übereinstimmen.

9. System nach dem Anspruch 8, **dadurch gekennzeichnet, dass** das Passwort durch Verkettung des Benutzernamens festgelegt wird, der dem in einem benutzerspezifischen Sicherheitsobjekt (SIMTer) gespeicherten IMSI-Code entspricht und in das mobile Endgerät (Ter01) eingegeben wird, wobei das Sicherheitsobjekt die Aktivierung des mobilen Endgeräts nach der Eingabe eines dem Benutzer bekannten Passworts autorisiert, wobei der IMSI-Code mit dem temporären Code verkettet wird, der dem P-TMSI-Code entspricht, der mit der Art von Dienst verkettet ist, die dem APNAME-Code entspricht und eventuell mit anderen Daten wie einer Lizenznummer eines Moduls (MGEST) zur Optimierung der Verbindungen des mobilen Endgeräts, oder einer Seriennummer dieses Moduls zur Optimierung der Verbindungen verkettet, wobei ein Hashing-Modul dann ein Hashing der verketteten Daten durchführt, wobei das Ergebnis des Hashing als Passwort gespeichert wird.

10. System nach Anspruch 8 oder 9, **dadurch gekennzeichnet, dass** das Verwaltungsgerät der drahtlosen Netzwerkzugangsstation einen Proxy-Server (PRAD1) umfasst, der mit einem Verwaltungsserver (RAD1) der Authentifizierungsdatenbank (BDRA1) kommuniziert, um die Authentifizierungsdatenbank abzurufen.

11. Verwendung eines Verwaltungsservers einer Authentifizierungsdatenbank (BDRAD1) zur Ausführung des Verfahrens nach einem der Ansprüche 1 bis 7, **dadurch gekennzeichnet, dass** der Verwaltungsserver der Authentifizierungsdatenbank von dem Verwaltungsgerät der Art des Dienstzugangspunkts zugreifbar ist, um ein Authentifizieren des Benutzers des Endgeräts, das sich an der drahtlosen Netzwerkzugangsstation verbindet, durchzuführen.

12. Verwendung eines mobilen Endgeräts zur Ausführung des Verfahrens nach einem der Ansprüche 1 bis 7, **dadurch gekennzeichnet, dass** das mobile Endgerät ein Modul zum Berechnen des Passworts umfasst, das mindestens durch den vom mobilen Endgerät gespeicherten Benutzernamen und den abhängig von der zwischen dem mobilen Endgerät und dem Mobilfunknetz hergestellten Verbindung temporären Code bestimmt wird, wobei ein Authentifizieren während einer Verbindung zu der drahtlosen Netzwerkzugangsstation nach einem Authentifizierungsprotokoll durchgeführt wird, das mindestens auf dem vom mobilen Endgerät berechneten und in der Authentifizierungsdatenbank gespeicherten Passwort basiert.

13. Verwendung eines mobilen Endgeräts nach Anspruch 12, **dadurch gekennzeichnet, dass** das Passwort in dem mobilen Endgerät abhängig von dem Benutzernamen des Benutzers des mobilen Endgeräts bestimmt wird, der dem in einem benutzerspezifischen Sicherheitsobjekt (SIMTer) gespeicherten IMSI-Code entspricht und in das mobile Endgerät eingegeben wird, wobei das Sicherheitsobjekt die Aktivierung des mobilen Endgeräts (Ter01) nach Eingabe eines dem Benutzer bekannten Passworts autorisiert.

## Claims

1. Method for authenticating at least one mobile terminal (Ter01, Ter02) capable of communicating with radio frequency link stations (BT1) of at least one mobile phone network (PLMN1) for communication by radio frequency waves, the terminal being capable of communicating furthermore with at least one wireless network access terminal (BOX1, PA1) managed by a device for management of the service access point type, the method comprising a step of connection to one of the stations of the mobile phone network, a password being determined by a calculating module of the mobile phone network, on the basis of data transmitted, by the mobile terminal or by a management node in the mobile phone network, **characterised in that** the mobile terminal stores a given type (APNAME1) of service available to a user of the mobile terminal, this type of service being provided by the mobile terminal, for connection to the station (BT1) of the mobile phone network, the connection to the station of the mobile phone network is followed by a step of initialisation or updating of an authentication database storing identification data of the terminal user associated with the password, this transmitted data comprising at least one username (ID_Ter01) stored by the mobile terminal and a temporary code (PTMSI1) stored by the mobile terminal and determined by said management node as a function of the connection established between the mobile terminal and the mobile phone network, the step of initialisation or updating of the authentication database being followed by a step of access to the authentication database (BDRAD1) by the management device of the service access point type, in order to carry out authentication of the terminal user connecting to the wireless network access terminal (BOX1, PA1), the terminal (Ter01) being authenticated, upon connection thereof to the wireless network access terminal, by at least:
- a step (Etp21) of determination, by a calculating module of the mobile terminal, of the identification data of the user and of the password determined by at least the username of the mobile terminal user and by the temporary code which depends on the previous connection established between the mobile terminal and the mobile phone network,
- a step (Etp23) of provision of the password associated with the identification data of the user to the device for management of the wireless network access terminal, by the calculating module of the terminal,
- a step (Etp26) of verification, by the device for management of the wireless network access terminal, of the password and of the identification data provided by the mobile terminal in the provision step (Etp23), as a function of the data stored in the authentication database during the step of initialisation or updating of the authentication database following the previous access of the terminal to the mobile phone network, in order to authorise connection of the mobile terminal to the wireless network access terminal, in case of correspondence.

2. Method according to claim 1, **characterised in that** the password is obtained by at least:
- a step (Etp083) of concatenation of the username of the user which corresponds to the IMSI code stored in a secure object specific to the user and inserted in the mobile terminal, the secure object authorising activation of the mobile terminal after entry of a password known to the user, the IMSI code being concatenated with the temporary code which corresponds to the P-TMSI code, concatenated with the type of service which corresponds to the APNAME code and optionally concatenated with other data such as a licence number of a module for optimising the connections of the mobile terminal, or a serial number of this module for optimising the connections,
- a step (Etp084) of hashing the concatenated data, the result of hashing being stored like the password.

3. Method according to claim 1 or 2, **characterised in that** the identification data of the user is transmitted in coded form, coding being carried out during a step of coding the identification data of the user preceding the step (Etp23) of provision of the password associated with the identification data of the user and the step of verification of the password and identification data, being preceded by a step of decoding the coded identification data or the step (Etp23) of provision of the password associated with the identification data of the user is preceded by a step of establishment of an encrypted tunnel between the mobile terminal and the device for management of the wireless network access terminal, carrying out coding of the identification data.

4. Method according to claim 1 or 2, **characterised in that** the terminal (Ter01) establishes a secure connection to the wireless network access terminal, by at least:
- a step of determination, by a calculating module of the mobile terminal, of the password determined by at least the username of the user of the mobile terminal and by the temporary code which depends on the connection established between the mobile terminal and the mobile phone network,
- a step of establishment of an encrypted tunnel (TIPSEC) with the aid of the password previously determined, between the mobile terminal and the device for management (RAD1) of the wireless network access terminal.

5. Method according to claim 1 or 2, **characterised in that** the terminal is authenticated, upon connection thereof to the wireless network access terminal, by at least:
- a step (Etp52) of provision of a given sequence sent by the device for management of the wireless network access terminal, to the mobile terminal,
- a step of determination, by a calculating module of the mobile terminal, of the identification data of the user and of the password determined by at least the username of the mobile terminal user and by the temporary code which depends on the connection established between the mobile terminal and the mobile phone network,
- a step (Etp55) of encryption of the sequence received by the mobile terminal, the password producing a first encryption key,
- a step of sending to the device for management of the wireless network access terminal, by the mobile terminal, of the sequence encrypted with the aid of the first encryption key,
- a step of reception and storage, by the device for management of the wireless network access terminal, of the sequence encrypted by the first encryption key,
- a step (Etp61) of encryption, by the management device, of the sequence determined with the aid of the password stored in the authentication database producing a second encryption key,
- a step (Etp62) of comparison of the sequence encrypted by the first encryption key and the sequence encrypted by the second encryption key in order to authorise connection of the mobile terminal to the wireless network access terminal, in case of correspondence.

6. Method according to one of claims 1 to 5, **characterised in that** it comprises a step (Etp59) of verification by the device for management of the wireless network access terminal, of the type of service provided upon a request for connection to the wireless network access terminal, the verification being carried out at a server of a subscription database storing identification data of users associated with data representing services subscribed to, a request for connection to the wireless network access terminal being rejected if the type of service provided by the mobile terminal does not correspond to a type of service stored in the subscription database associated with the identification data of the user, or if the type of service provided by the mobile terminal is not representative of a service of connections extended by wireless network access terminals.

7. Method according to one of claims 1 to 6, **characterised in that** it comprises, in case of failure of authentication of the mobile terminal by the device for management of the wireless network access terminal, a step of sending to the mobile terminal a request to update its password by a new connection to the mobile phone network, the connection method comprising, in case of successful authentication of the mobile terminal by the device for management of the wireless network access terminal, a step (Etp64, Etp29) of establishment of a connection by the mobile terminal via the wireless network access terminal.

8. System for authenticating at least one mobile terminal capable of communicating with radio frequency link stations (BT1) of at least one mobile phone network (PLMN1) for communication by radio frequency waves, the terminal being capable of communicating furthermore with at least one wireless network access terminal (PA1, BOX1) managed by a device for management of the service access point type, **characterised in that**, as the mobile terminal stores a given type (APNAME1) of service available to a user of the mobile terminal, this type of service being provided by the mobile terminal, upon connection to one of the stations of the mobile phone network, the connection to the station of the mobile phone network permits activation of a module for initialisation or updating of an authentication database (BDRAD1) storing identification data of the terminal user associated with a password, this password being determined by a calculating module of the mobile phone network, on the basis of data transmitted by the mobile terminal or by a management node in the mobile phone network, this transmitted data comprising at least one username (ID_Ter01) stored by the mobile terminal and a temporary code (PTMSI1) stored by the mobile terminal and determined by said management node as a function of the connection established between the mobile terminal and the mobile phone network, the authentication database being accessible to the management device of the service access point type, in order to carry out authentication of the terminal user connecting to the wireless network access terminal, said connection being authorised if the data provided by the mobile terminal to the wireless network access terminal (PA1, BOX1) correspond to the data stored by the authentication database (BDRAD1) during said previous connection of the mobile terminal to one of the stations of the mobile phone network.

9. System according to claim 8, **characterised in that** the password is obtained by concatenation of the username of the user which corresponds to the IMSI code stored in a secure object (SIMTer) specific to the user and inserted in the mobile terminal (Ter01), the secure object authorising activation of the mobile terminal after entry of a password known to the user, the IMSI code being concatenated with the temporary code which corresponds to the P-TMSI code, concatenated with the type of service which corresponds to the APNAME code and optionally concatenated with other data such as a licence number of a module (MGEST) for optimising the connections of the mobile terminal, or a serial number of this module for optimising the connections, a hashing module then carrying out hashing of the concatenated data, the result of hashing being stored like the password.

10. System according to claim 8 or 9, **characterised in that** the device for management of the wireless network access terminal comprises a proxy server (PRAD1) communicating with a server (RAD1) for management of the authentication database (BDRAD1) in order to consult the authentication database.

11. Use of a server for management of an authentication database (BDRAD1), for carrying out the method according to one of claims 1 to 7, **characterised in that** the server for management of the authentication database being accessible to the device for management of the service access point type, in order to carry out authentication of the terminal user connecting to the wireless network access terminal.

12. Use of a mobile terminal for carrying out the method according to one of claims 1 to 7, **characterised in that** the mobile terminal comprises a module for calculation of the password determined by at least the username stored by the mobile terminal and by the temporary code which depends on the connection established between the mobile terminal and the mobile phone network, authentication being carried out upon connection to the wireless network access terminal, according to an authentication protocol based on at least the password calculated by the mobile terminal and stored in the authentication database.

13. Use of a mobile terminal according to claim 12, **characterised in that** the password is determined, in the mobile terminal, as a function of the username of the mobile terminal user, which corresponds to the IMSI code stored in a secure object (SIMTer) specific to the user and inserted in the mobile terminal, the secure object authorising activation of the mobile terminal (Ter01) after entry of a password known to the user.
